(19) Europäisches Patentamt / European Patent Office / Office européen des brevets

(11) **EP 2 882 122 B1**

(12) **FASCICULE DE BREVET EUROPEEN**

(45) Date de publication et mention
de la délivrance du brevet:
**31.01.2018 Bulletin 2018/05**

(51) Int Cl.:
*H04J 14/02* (2006.01)      *H04L 12/417* (2006.01)
*H04L 12/433* (2006.01)     *H04B 10/80* (2013.01)

(21) Numéro de dépôt: **14195870.2**

(22) Date de dépôt: **02.12.2014**

(54) **DISPOSITIF ET PROCÉDÉ D'ARBITRAGE OPTIQUE DANS UN RÉSEAU**

VORRICHTUNG UND VERFAHREN ZUR OPTISCHEN ARBITRIERUNG IN EINEM NETZWERK

DEVICE AND METHOD FOR OPTICAL ARBITRATION IN A NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.12.2013 FR 1362301**

(43) Date de publication de la demande:
**10.06.2015 Bulletin 2015/24**

(73) Titulaire: **Commissariat à l'Énergie Atomique
et aux Énergies Alternatives
75015 Paris (FR)**

(72) Inventeurs:
 • **Zid, Mounir
  5160 El Jem (TN)**
 • **Thonnart, Yvain
  38100 Grenoble (FR)**

(74) Mandataire: **Bonnet, Michel
  Cabinet Bonnet
  93, rue Réaumur - Boîte 10
  75002 Paris (FR)**

(56) Documents cités:
 • **DANA VANTREASE ET AL: "Light speed
   arbitration and flow control for nanophotonic
   interconnects", MICROARCHITECTURE, 2009.
   MICRO-42. 42ND ANNUAL IEEE/ACM
   INTERNATIONAL SYMPOSIUM ON, IEEE,
   PISCATAWAY, NJ, USA, 12 décembre 2009
   (2009-12-12), pages 304-315, XP031597247, ISBN:
   978-1-60558-798-1**
 • **MARSAN M A ET AL: "ALL-OPTICAL WDM
   MULTI-RINGS WITH DIFFERENTIATED QOS",
   IEEE COMMUNICATIONS MAGAZINE, IEEE
   SERVICE CENTER, PISCATAWAY, US, vol. 37,
   no. 2, 1 février 1999 (1999-02-01), pages 58-66,
   XP000804505, ISSN: 0163-6804, DOI:
   10.1109/35.747250**
 • **WILSON A ED - INSTITUTE OF ELECTRICAL AND
   ELECTRONICS ENGINEERS: "SSA: a
   high-performance serial interface for
   unparalleled connectivity", DIGEST OF PAPERS
   OF COMPCON (COMPUTER SOCIETY
   CONFERENCE) 1996 TECHNOLOGIES FOR THE
   INFORMATION SUPERHIGHWAY. SANTA
   CLARA, FEB. 25 - 28, 1996; [DIGEST OF PAPERS
   OF THE COMPUTER SOCIETY COMPUTER
   CONFERENCE COMPCON], LOS ALAMITOS,
   IEEE COMP. SOC. PRESS, vol. CONF. 41, 25
   février 1996 (1996-02-25), pages 274-279,
   XP010160908, DOI:
   10.1109/CMPCON.1996.501782 ISBN:
   978-0-8186-7414-3**

EP 2 882 122 B1

**Description**

La présente invention concerne un dispositif d'arbitrage optique entre des demandes conflictuelles d'accès à une ressource partagée, ces demandes conflictuelles étant émises par une pluralité de N noeuds de traitement d'un système de réseau sur puce. Elle concerne également un procédé correspondant.

Elle s'applique dans le domaine de la photonique.

La photonique constitue une nouvelle plateforme technologique très prometteuse pour la conception de systèmes à hautes performances, de plus en plus demandeurs de bande passante.

A titre d'exemple, les nouveaux systèmes multi processeurs sont capables de fournir une énorme puissance de calcul requérant des débits de transfert de données supérieurs à 100 Térabit/s. Ces débits de transfert de données peuvent être nécessaires lors des échanges de données entre coeurs de traitement, notamment à l'intérieur d'un processeur multi coeurs.

Les interconnexions optiques sont de nos jours la seule technologie capable de transmette de tels débits. Ils peuvent être atteints par les interconnexions optiques grâce notamment à la technique du multiplexage par répartition en longueur d'onde (WDM, de l'anglais « Wavelength Division Multiplexing »). Cette technique permet de propager plusieurs signaux optiques de longueurs d'ondes différentes simultanément dans un même guide d'onde optique, sans aucun risque de collision entre les différents signaux. Le multiplexage en longueur d'onde constitue une solution économique pour augmenter la capacité en bande passante du guide d'onde.

Plus concrètement, la photonique est une technologie prometteuse pour la conception de systèmes de réseaux sur puces, puisqu'elle permet, outre l'augmentation de la bande passante, de s'affranchir des problèmes liés à la haute densité des interconnexions électriques dans ce type de systèmes électroniques en apportant des interconnexions à faible encombrement.

L'utilisation d'interconnexions optiques à la place des interconnexions électriques dans les circuits intégrés présente encore deux autres avantages. D'une part, la transmission d'un signal optique à travers un guide d'onde permet d'écourter les délais de transmission et de réduire ainsi l'atténuation du signal transmis. D'autre part, l'atténuation du signal optique se propageant dans le guide d'onde est indépendante du débit de transfert des données, ce qui peut potentiellement induire des économies d'énergie et des gains en performances des circuits ainsi conçus.

Pour pouvoir utiliser des interconnexions optiques dans un circuit intégré, l'utilisation d'un certain nombre de dispositifs optiques dans le circuit intégré est requise. Tel est le cas des dispositifs suivants :

- au moins une source optique, notamment une source laser, apte à générer et émettre un signal optique destiné à se propager dans les interconnexions optiques,
- au moins un modulateur optique, par exemple implémenté sous la forme d'un micro-résonateur en anneau, permettant de moduler le signal optique,
- au moins un bus optique, notamment un guide d'onde en silicium, à travers lequel le signal optique modulé est transmis,
- au moins un convertisseur optoélectronique, notamment une photodiode, permettant de détecter le signal optique et de le convertir en signal électrique à son arrivée à destination (i.e. à son arrivée en entrée d'un noeud de traitement).

De nombreuses avancées dans le domaine de l'intégration des fonctions optiques dans les puces microélectroniques ont eu lieu ces derniers temps ouvrant des perspectives innovantes pour l'amélioration des performances des circuits intégrés. Ainsi, de nos jours, de plus en plus de dispositifs optiques ou optoélectroniques comme des micro-résonateurs en anneau, des détecteurs au germanium, des guides d'onde en silicium sur isolant (SOI, de l'anglais « Silicon on Insulator »), etc., sont conçus pour pouvoir remplacer quelques fonctions électriques dans certains circuits microélectroniques.

Ces avancées ont rendu possible l'utilisation d'interconnexions optiques pour l'acheminement des données entre les noeuds de traitement d'un système de réseau sur puce.

En pratique, une matrice de commutation optique assurant la communication entre N noeuds de traitement d'un système de réseau sur puce peut être constituée d'un bus optique, notamment un guide d'onde, et d'une source optique, notamment externe au système sur puce, destinée à engendrer le signal optique se propageant dans ce bus optique. Ce signal optique peut comporter un ensemble de N signaux optiques multiplexés selon la technique WDM précédemment décrite, chacun de longueur d'onde différente. Cet ensemble de signaux optiques multiplexés est aussi connu de l'homme du métier sous le nom de peigne de fréquences optiques.

Un schéma de communication de type MWSR (de l'anglais « Multiple-Writer Single-Reader ») peut par ailleurs être utilisé entre les N noeuds de traitement, permettant l'accès simultané au bus optique des N noeuds de traitement pour l'écriture de données à transmettre et l'accès individuel à ce bus de l'un parmi ces N noeuds de traitement pour la lecture de ces données.

Pour mettre en place ce schéma de communication, chacun des N noeuds de traitement est sensible en lecture à une seule longueur d'onde du peigne de fréquences optiques, cette longueur d'onde étant caractéristique des signaux optiques adressés à ce noeud. En revanche, chaque noeud de traitement est conçu pour pouvoir moduler en écriture un signal optique selon les N-1 longueurs d'ondes différentes de celle qui le caractérise. Un noeud de traitement peut ainsi moduler et transmettre un message à l'un quelconque des N-1 autres noeuds de traitement sensibles en lecture à l'une parmi ces N-1 longueurs d'ondes. Ainsi, chacun des N noeuds de traitement contrôle N-1 modulateurs optiques, chaque modulateur optique étant couplé à l'une des N-1 longueurs d'ondes du peigne de fréquences optiques. Un modulateur optique peut notamment être constitué d'un micro-résonateur optique en anneau utilisé comme interrupteur afin de moduler le signal optique couplé à sa fréquence de résonance. De même, chacun des N noeuds de traitement contrôle un filtre optique permettant la lecture de tout signal optique qui lui est adressé. Ce filtre optique peut également être constitué d'un micro-résonateur optique en anneau permettant d'extraire du peigne de fréquences uniquement le signal optique de longueur d'onde caractéristique du noeud considéré. Par ailleurs, une configuration particulière en aller-retour du bus optique peut permettre tout d'abord la transmission des signaux optiques en écriture dans un premier sens aller du bus, avant de permettre la lecture de signaux optiques transmis dans le bus dans un deuxième sens retour du bus.

Ce schéma de communication permet à chacun des N noeuds de traitement d'écrire et/ou de lire des données sur le bus optique en même temps que les autres, ces données étant adressées à ou provenant d'autres noeuds de traitement. Néanmoins, plusieurs noeuds de traitement peuvent vouloir moduler des signaux de même longueur d'onde en même temps, ce qui peut occasionner la transmission de plusieurs signaux en écriture au même noeud destinataire et en même temps, pouvant provoquer des collisions entre les données et induire des erreurs dans les informations transmises. Les noeuds impliqués devront alors moduler et transmettre à nouveau leurs données, diminuant de cette façon les performances du système.

Afin d'éviter les collisions entre les données, une solution plus efficace que la retransmission des données est l'arbitrage entre les demandes conflictuelles d'accès en écriture à une même ressource (noeud de traitement ou autre) par plusieurs noeuds de traitement, pour la sélection de l'un de ces noeuds de traitement considéré comme prioritaire. Mais cet arbitrage se fait généralement au prix d'un délai de transmission supplémentaire induit par la prise de décision du dispositif d'arbitrage qui le met en oeuvre ainsi que d'une augmentation de la complexité du circuit intégré.

En outre, les dispositifs d'arbitrage existants purement électroniques ne sont pas adaptés aux nouveaux systèmes de réseaux sur puces à hautes performances incluant des dispositifs optiques. En effet, ces dispositifs d'arbitrage utilisent souvent des algorithmes non équitables, selon lesquels tous les noeuds n'ont pas la même probabilité d'accès aux ressources partagées, provoquant de fortes latences dans la transmission des données et une utilisation inefficace de leur réseau lorsque le nombre de noeuds souhaitant accéder à une même ressource partagée est élevé. Ces dispositifs d'arbitrage limitent donc les performances en bande passante des systèmes conçus avec des interconnexions optiques.

Afin d'améliorer l'efficacité des systèmes de communication, notamment de type MWSR, utilisant des interconnexions optiques, des dispositifs d'arbitrage rapides à base de technologie optique sont proposés.

L'invention s'applique ainsi plus particulièrement à un dispositif d'arbitrage optique entre des demandes conflictuelles d'accès à une ressource partagée émises par une pluralité de N noeuds de traitement d'un système de réseau sur puce, pour la sélection d'un noeud de traitement parmi la pluralité des N noeuds de traitement souhaitant accéder à la ressource partagée, comportant :

- au moins un bus optique principal d'arbitrage,
- au moins une source optique destinée à émettre un signal optique dans ledit au moins un bus optique principal d'arbitrage, et
- une succession de N cellules optiques d'arbitrage couplées audit au moins un bus optique principal d'arbitrage, chacune de ces cellules optiques d'arbitrage étant associée à un noeud de traitement parmi la pluralité des N noeuds de traitement et chacune présentant des moyens de sélection du noeud de traitement auquel elle est associée par détournement du signal optique émis par la source.

Le document de Dally et Towles, intitulé « Principles and practices of interconnection networks », publié par Morgan Kaufmann en 2004, propose en pages 252 à 255 un dispositif électronique d'arbitrage en série (de l'anglais « daisy-chain arbiter »). Ce dispositif d'arbitrage est constitué d'un ensemble de cellules d'arbitrage connectées les unes aux autres en série, formant une chaîne de cellules d'arbitrage successivement disposées le long de cette connexion en série. Chaque cellule d'arbitrage a pour but de contrôler l'accès à une ressource partagée pour un noeud de traitement qui lui est assigné. La sélection de l'un de ces noeuds s'articule selon un schéma de priorités prédéfinies : à chaque cellule d'arbitrage est assignée une priorité fixe et relative à sa position dans la chaîne. Ainsi, la première cellule de la chaîne dispose de la priorité la plus élevée et la dernière cellule de la chaîne de la priorité la plus faible. Concrètement, un signal d'autorisation d'accès à la ressource partagée circule le long de la connexion en série dans l'ordre des priorités prédéfinies et la première cellule d'arbitrage désireuse de réserver un accès à la ressource partagée pour le noeud de traitement auquel elle est associée change la valeur de ce signal d'autorisation. Il passe par exemple de la valeur « 1 », signifiant que la ressource est disponible, à la valeur « 0 », signifiant que l'accès à la ressource est désormais réservé. Pour libérer de nouveau l'accès à la ressource, il suffit alors à la cellule d'arbitrage concernée de remettre ce signal d'autorisation à « 1 ».

Par analogie avec les technologies disponibles en optique, l'enseignement de ce document permet de concevoir un dispositif d'arbitrage optique dans lequel N cellules d'arbitrage associées à N noeuds de traitement sont successivement disposées le long d'un même bus optique principal d'arbitrage alimenté en signal optique par une source à l'une de ses extrémités, cette extrémité d'alimentation définissant l'ordre prédéfini des priorités. Chaque cellule d'arbitrage présente alors des moyens de détournement du signal optique émis par la source de manière à réserver l'accès à la ressource partagée pour le noeud de traitement auquel elle est associée. Ces moyens de détournement peuvent comporter un micro-résonateur en anneau.

On comprend que lorsqu'une cellule d'arbitrage a détourné à son profit le signal optique, les cellules d'arbitrage disposées en aval le long du bus optique principal d'arbitrage ne peuvent pas réserver l'accès à la ressource partagée tant que le signal optique n'est pas de nouveau libéré dans le bus optique. En conséquence, le noeud de traitement associé à la cellule d'arbitrage qui a détourné le signal optique peut utiliser la ressource partagée sans risques de collision. Ainsi, avantageusement, même si ce dispositif d'arbitrage optique n'est pas équitable du point de vue de la gestion des priorités, il permet la résolution rapide de conflits potentiels entre plusieurs noeuds de traitement souhaitant accéder à une même ressource partagée. En outre, il est facilement extensible, pouvant s'adapter à un éventuel ajout de noeuds de traitement dans le système. Il suffit d'ajouter, le long du bus optique principal d'arbitrage, autant de cellules d'arbitrage que de noeuds ajoutés dans le système, sans autre modification nécessaire.

En revanche, on comprend aussi que lorsqu'une première cellule d'arbitrage a détourné à son profit le signal optique, les cellules d'arbitrage disposées en amont le long du bus optique principal d'arbitrage peuvent tout à fait le détourner aussi. Ainsi, si une deuxième cellule d'arbitrage, située en amont de la première, détourne à son tour le signal optique, elle interrompt automatiquement l'accès à la ressource partagée réservé par la première. Cela provoque donc des interruptions dans la transmission des données.

Afin d'éviter ces interruptions intempestives, l'article de Vantrease et al, intitulé « Corona: system implications of emerging nanophotonic technology », publié dans ISCA Proceedings of the 35th Annual International Symposium on Computer Architecture, 2008, pages 153-164, propose un dispositif d'arbitrage optique dynamique basé sur un mécanisme dit de « capture de jeton ». Dans cet article, une pluralité de N noeuds de traitement est en compétition pour l'accès à une pluralité de ressources partagées. Afin d'éviter les conflits entre les noeuds pour l'accès à ces ressources, un dispositif d'arbitrage optique est mis en place.

Ce dispositif d'arbitrage comporte un guide d'onde principal et un guide d'onde en anneau. Le guide d'onde principal est alimenté par une source optique fournissant un peigne de fréquences optiques se propageant dans ce guide d'onde, chaque longueur d'onde du peigne étant associée à l'une des ressources partagées. Le guide d'onde en anneau permet de gérer le mécanisme de « capture de jeton » destiné à allouer les différentes ressources partagées aux différents noeuds de traitement.

N cellules d'arbitrage, chacune associée à l'un parmi la pluralité des N noeuds de traitement sont disposées entre le guide d'onde en anneau et le guide d'onde principal. Chaque cellule d'arbitrage présente des moyens de détournement du signal optique se propageant dans le guide d'onde principal de manière à réserver l'accès du noeud de traitement auquel elle est associée à l'une des ressources partagées.

Les moyens de détournement peuvent comporter plusieurs paires de filtres optiques, par exemple de micro-résonateurs en anneau. Chaque paire de filtres comporte, d'une part, un premier filtre optique capable d'injecter dans le guide d'onde en anneau l'une des longueurs d'onde du peigne de fréquences se propageant dans le guide d'onde principal, générant ainsi un jeton correspondant. D'autre part, chaque paire comporte un deuxième filtre optique capable de détourner à son profit l'un des jetons se propageant dans le guide d'onde en anneau. De ce fait, le noeud de traitement associé à la cellule d'arbitrage qui détourne un jeton peut utiliser la ressource partagée associée à la longueur d'onde du jeton détourné sans risques de collision ni d'interruption. En effet, lorsqu'une cellule d'arbitrage a détourné à son profit l'un des jetons, aucune des autres cellules d'arbitrage disposées le long du guide d'onde en anneau n'a plus accès à ce jeton : il n'y a notamment plus de notion de disposition en amont ou en aval dans ce guide d'onde en anneau. En conséquence, les autres cellules d'arbitrage ne peuvent pas réserver l'accès à la ressource partagée associée tant que ce jeton n'est pas à nouveau injecté dans le guide d'onde en anneau par le premier filtre optique de la cellule qui a détourné le jeton.

Ce dispositif d'arbitrage permet ainsi de s'affranchir des problèmes précédemment évoqués de collisions entre les données et d'interruptions des transferts liées aux priorités. Néanmoins, ce dispositif n'est pas complètement équitable, car tous les noeuds n'ont pas la même probabilité d'accès aux ressources partagées. En effet, la façon dont les jetons se propagent dans le guide d'onde en anneau implique que les noeuds voisins d'un noeud qui libère le jeton, dans le sens de propagation des jetons, sont prioritaires pour la réservation de ce jeton.

Un enseignement similaire est également divulgué dans un autre article de Vantrease et al, intitulé « Light speed arbitration and flow control for nanophotonic interconnects », publié dans Micro-42, 42nd Annual IEEE/ACM International Symposium on Microarchitecture, Piscataway NJ (USA), 12-16 décembre 2009, pages 304-315.

L'article de Marsan et al, intitulé « All-optical WDM multi-rings with differentiated QoS », publié dans IEEE Communications Magazine, IEEE Service Center, Piscataway (USA), vol. 37, n° 2, 1er février 1999, pages 58-66, divulgue un dispositif d'arbitrage électronique entre des demandes conflictuelles d'accès à plusieurs ressources partagées émises par une pluralité de N noeuds de traitement d'un système de réseau sur puce, pour la sélection d'un noeud de traitement parmi la pluralité des N noeuds de traitement souhaitant accéder à chaque ressource partagée, comportant :

- des canaux logiques, chacun permettant la transmission simultanée de données provenant d'une pluralité de noeuds de traitement et destinées à être reçues par une ressource partagée (page 58, paragraphe « Node and Network Architecture », colonne de droite, lignes 1 à 8),

chaque ressource partagée pouvant recevoir simultanément des données provenant de chacun des noeuds de traitement (page 58, paragraphe « Node and Network Architecture », colonne de droite, lignes 1 à 8), chacun des noeuds de traitement pouvant vérifier la disponibilité du canal logique pour la transmission des données à la ressource partagée (page 58, paragraphe « Node and Network Architecture », colonne de droite, lignes 24 à 29).

Mais il ne divulgue pas de source optique, ni de bus optique d'arbitrage, ni de signaux optiques, ni de cellules optiques d'arbitrage.

L'article de Wilson, intitulé « SSA: a high-performance serial interface for unparallel connectivity », publié dans Digest of Papers of COMPCON (Computer Society Conférence), 1996 Technologies for the Information Superhighway, Santa Clara, 25-28 février 1996, pages 274-279, divulgue un dispositif d'arbitrage électronique entre des demandes conflictuelles d'accès à plusieurs ressources partagées émises par une pluralité de N noeuds de traitement d'un système de réseau sur puce, pour la sélection d'un noeud de traitement parmi la pluralité des N noeuds de traitement souhaitant accéder à chaque ressource partagée, comportant :

- des connexions électriques permettant une interconnexion des N noeuds de traitement, chaque connexion électrique prévoyant la transmission simultanée de données entre deux noeuds de traitement (page 274, chapitre 1.1 « Serial links », colonne de gauche, lignes 1 à 9),

chaque ressource partagée pouvant recevoir simultanément des données provenant de chacun des N noeuds de traitement au travers de deux connexions électriques (page 275, chapitre 1.2 « Hardware routing », colonne de gauche, lignes 6 à 11), chaque ressource partagée pouvant vérifier la priorité des données provenant des N noeuds de traitement (page 275, chapitre 1.2 «Hardware routing », colonne de gauche, lignes 13 à 20).

Mais il ne divulgue pas de source optique, ni de bus optique d'arbitrage, ni de signaux optiques, ni de cellules optiques d'arbitrage.

Il peut ainsi être souhaité de prévoir un dispositif d'arbitrage optique qui permette de s'affranchir d'au moins une partie des problèmes et contraintes précités.

L'invention a ainsi pour objet un dispositif d'arbitrage optique entre des demandes conflictuelles d'accès à une ressource partagée émises par une pluralité de N noeuds de traitement d'un système de réseau sur puce pour la sélection d'un noeud de traitement parmi la pluralité des N noeuds de traitement souhaitant accéder à la ressource partagée, comportant :

- au moins un bus optique principal d'arbitrage,
- au moins une source optique destinée à émettre un premier signal optique dans ledit au moins un bus optique principal d'arbitrage, et
- une succession de N cellules optiques d'arbitrage couplées audit au moins un bus optique principal d'arbitrage, chacune de ces cellules optiques d'arbitrage étant associée à un noeud de traitement parmi la pluralité des N noeuds de traitement et chacune présentant des moyens de sélection du noeud de traitement auquel elle est associée par détournement du premier signal optique,

dans lequel :

- ladite au moins une source optique est conçue pour émettre un deuxième signal optique se propageant dans un sens opposé au premier signal optique par rapport à ladite succession des N cellules optiques d'arbitrage le long dudit au moins un bus principal d'arbitrage, et
- les moyens de sélection de chaque cellule optique d'arbitrage sont conçus pour sélectionner le noeud de traitement auquel elle est associée par détournement des premier et deuxième signaux optiques.

Ainsi, grâce à l'invention, le dispositif d'arbitrage optique permet une résolution de conflits rapide et équitable. En effet, la sélection du noeud de traitement s'effectuant en fonction de la détection de deux signaux optiques se propageant dans des sens opposés dans le bus optique principal d'arbitrage, la probabilité d'accès de chaque noeud de traitement aux ressources partagées est indépendante de la disposition de sa cellule d'arbitrage le long de ce bus.

En outre, ce dispositif d'arbitrage est facilement extensible, pouvant s'adapter à faible coût à un éventuel incrément du nombre de noeuds dans le circuit. En effet, l'ajout d'un nouveau noeud de traitement au système de réseau sur puce n'implique que l'ajout au dispositif d'arbitrage d'une nouvelle cellule optique d'arbitrage associée à ce nouveau noeud de traitement.

De façon optionnelle, les moyens de sélection de chaque cellule d'arbitrage comportent :

- au moins un filtre optique pour le détournement des premier et deuxième signaux optiques,

- au moins un bus optique secondaire d'arbitrage couplé audit au moins un filtre optique et destiné à la propagation des premier et deuxième signaux optiques détournés,
- au moins un convertisseur optoélectronique connecté à l'une des extrémités dudit au moins un bus optique secondaire d'arbitrage pour la conversion des premier et deuxième signaux optiques détournés en au moins un signal électrique d'acquittement.

De façon optionnelle également, un dispositif d'arbitrage optique selon l'invention peut comporter :

- deux sources optiques conçues pour engendrer respectivement les premier et deuxième signaux optiques,
- un premier bus optique principal d'arbitrage, raccordé à l'une des deux sources optiques et couplé aux N cellules d'arbitrage, dans lequel est destiné à se propager le premier signal optique dans un premier sens par rapport à ladite succession des N cellules optiques d'arbitrage,
- un deuxième bus optique principal d'arbitrage, raccordé à l'autre des deux sources optiques et couplé aux N cellules d'arbitrage, dans lequel est destiné à se propager le deuxième signal optique dans un deuxième sens, opposé au premier sens, par rapport à ladite succession des N cellules optiques d'arbitrage.

De façon optionnelle également, un dispositif d'arbitrage optique selon l'invention peut comporter :

- une source optique unique,
- un diviseur de signaux optiques connecté en sortie de la source optique unique, conçu pour scinder un signal optique engendré par la source optique unique en deux signaux optiques de même longueur d'onde se propageant respectivement dans deux branches de sortie du diviseur,
- un premier bus optique principal d'arbitrage, raccordé à l'une des deux branches de sortie du diviseur et couplé aux N cellules d'arbitrage, dans lequel est destiné à se propager l'un des deux signaux optiques issus du diviseur en tant que premier signal optique dans un premier sens par rapport à ladite succession des N cellules optiques d'arbitrage, et
- un deuxième bus optique principal d'arbitrage, raccordé à l'autre des deux branches de sortie du diviseur et couplé aux N cellules d'arbitrage, dans lequel est destiné à se propager l'autre des deux signaux optiques issus du diviseur en tant que deuxième signal optique dans un deuxième sens, opposé au premier sens, par rapport à ladite succession des N cellules optiques d'arbitrage.

De façon optionnelle également, les moyens de sélection comportent :

- deux filtres optiques pour le détournement respectif des premier et deuxième signaux optiques,
- deux bus optiques secondaires d'arbitrage chacun couplé à l'un des deux filtres optiques et chacun étant destiné à la propagation de l'un parmi les premier et deuxième signaux optiques détournés,
- deux convertisseurs optoélectroniques chacun raccordé à l'une des extrémités de l'un des deux bus optiques secondaires d'arbitrage pour la conversion des premier et deuxième signaux optiques détournés en des premier et deuxième signaux électriques d'acquittement.

De façon optionnelle également, un dispositif d'arbitrage optique selon l'invention peut comporter :

- deux sources optiques conçues pour engendrer respectivement les premier et deuxième signaux optiques, ceux-ci étant de longueurs d'ondes différentes,
- un unique bus optique principal d'arbitrage, raccordé aux deux sources optiques respectivement en ses deux extrémités et couplé aux N cellules d'arbitrage, dans lequel sont destinés à se propager le premier signal optique dans un premier sens par rapport à ladite succession des N cellules optiques d'arbitrage et le deuxième signal optique dans un deuxième sens, opposé au premier sens, par rapport à ladite succession des N cellules optiques d'arbitrage.

De façon optionnelle également, les moyens de sélection comportent :

- deux filtres optiques pour le détournement respectif des premier et deuxième signaux optiques,
- un unique bus optique secondaire d'arbitrage couplé aux deux filtres optiques et destiné à la propagation des premier et deuxième signaux optiques détournés,
- deux convertisseurs optoélectroniques raccordés respectivement aux deux extrémités du bus optique secondaire d'arbitrage pour la conversion des premier et deuxième signaux optiques détournés en des premier et deuxième signaux électriques d'acquittement.

De façon optionnelle également, les moyens de sélection comportent :

- deux filtres optiques pour le détournement des premier et deuxième signaux optiques,
- un unique bus optique secondaire d'arbitrage couplé aux deux filtres optiques et destiné à la propagation des premier et deuxième signaux optiques détournés,
- un unique convertisseur optoélectronique raccordé à au moins l'une des deux extrémités du bus optique secondaire d'arbitrage pour la conversion des premier et deuxième signaux optiques détournés en un unique signal électrique d'acquittement.

L'invention a également pour objet un procédé d'arbitrage optique entre des demandes conflictuelles d'accès à une ressource partagée émises par une pluralité de N noeuds de traitement d'un système de réseau sur puce, pour la sélection d'un noeud de traitement parmi la pluralité des N noeuds de traitement souhaitant accéder à la ressource partagée, comportant les étapes suivantes :

- émission d'un premier signal optique par au moins une source optique dans au moins un bus optique principal d'arbitrage auquel sont couplées N cellules optiques d'arbitrage successives, chacune de ces cellules optiques d'arbitrage étant associée à un noeud de traitement parmi la pluralité des N noeuds de traitement,
- sélection d'un noeud de traitement par détournement, par la cellule optique d'arbitrage associée à ce noeud de traitement, du premier signal optique,

caractérisé en ce que :

- ladite au moins une source optique émet un deuxième signal optique se propageant dans un sens opposé au premier signal optique par rapport à ladite succession des N cellules optiques d'arbitrage le long dudit au moins un bus optique principal d'arbitrage, et
- la sélection du noeud de traitement s'effectue par détournement, par la cellule d'arbitrage associée à ce noeud de traitement, des premier et deuxième signaux optiques.

De façon optionnelle, la sélection du noeud de traitement comporte les étapes suivantes :

- transmission, par chaque noeud de traitement souhaitant accéder à la ressource partagée, d'au moins un signal de requête à la cellule optique d'arbitrage qui lui est associée,
- tentative de détournement, par chaque cellule optique d'arbitrage ayant reçu ledit au moins un signal de requête, des premier et deuxième signaux optiques se propageant en sens opposés le long dudit au moins un bus optique principal d'arbitrage,
- conversion, par un convertisseur optoélectronique de la cellule optique d'arbitrage ayant réussi à détourner le premier signal optique, du premier signal optique en un premier signal électrique d'acquittement, et transmission de ce premier signal électrique d'acquittement au noeud de traitement associé à cette cellule optique d'arbitrage,
- conversion, par un convertisseur optoélectronique de la cellule optique d'arbitrage ayant réussi à détourner le deuxième signal optique, du deuxième signal optique en un deuxième signal électrique d'acquittement, et transmission de ce deuxième signal électrique d'acquittement au noeud de traitement associé à cette cellule optique d'arbitrage,

l'un des noeuds de traitement souhaitant accéder à la ressource partagée étant sélectionné s'il reçoit les deux signaux électriques d'acquittement en réponse à sa requête.

De façon optionnelle également, si l'un des noeuds de traitement souhaitant accéder à la ressource partagée est sélectionné, il maintient la transmission dudit au moins un signal de requête à la cellule optique d'arbitrage qui lui est associée pendant un temps d'accès à la ressource partagée et cesse cette transmission dès lors qu'il libère la ressource partagée.

De façon optionnelle également, tout noeud de traitement souhaitant accéder à la ressource partagée mais ne recevant qu'au plus un signal d'acquittement en réponse à sa requête, cesse la transmission dudit au moins un signal de requête pendant un temps d'attente programmable.

De façon optionnelle également, le temps d'attente est calculé par chaque noeud de traitement selon un schéma d'arbitrage du type Round Robin.

L'invention sera mieux comprise à l'aide de la description qui va suivre, donnée uniquement à titre d'exemple et faite en se référant aux dessins annexés dans lesquels :

- la figure 1 représente schématiquement la structure générale d'un système de réseau de noeuds de traitement sur puce comportant un dispositif d'arbitrage optique selon un premier mode de réalisation de l'invention,
- la figure 2 illustre en détail une cellule optique d'arbitrage du dispositif d'arbitrage optique de la figure 1,
- la figure 3 représente schématiquement la structure générale possible de l'un des noeuds de traitement du système de réseau sur puce de la figure 1,
- la figure 4 illustre les étapes successives d'un procédé d'arbitrage optique selon un mode de réalisation de l'invention, par exemple mis en oeuvre par le dispositif d'arbitrage optique de la figure 1,
- la figure 5 illustre les étapes successives d'un procédé de contrôle d'un noeud de traitement du système de réseau sur puce de la figure 1, mis en oeuvre lors de l'exécution du procédé d'arbitrage optique de la figure 4,
- les figures 6 et 7 représentent schématiquement la structure générale d'un système de réseau sur puce comportant un dispositif d'arbitrage optique selon des deuxième et troisième modes de réalisation de l'invention,
- la figure 8 illustre en détail une cellule optique d'arbitrage du dispositif d'arbitrage optique de la figure 7,

- la figure 9 représente schématiquement la structure générale d'un système de réseau sur puce comportant un dispositif d'arbitrage optique selon un quatrième mode de réalisation de l'invention,
- les figures 10 et 11 illustrent en détail deux variantes possibles de la cellule optique d'arbitrage de la figure 8,
- la figure 12 illustre les étapes successives d'un procédé de calibrage d'un détecteur de signal électrique d'acquittement du système de réseau sur puce de la figure 9, et
- la figure 13 illustre en détail le schéma électrique d'un élément de calibrage d'un détecteur de signal électrique d'acquittement du système de réseau sur puce de la figure 9.

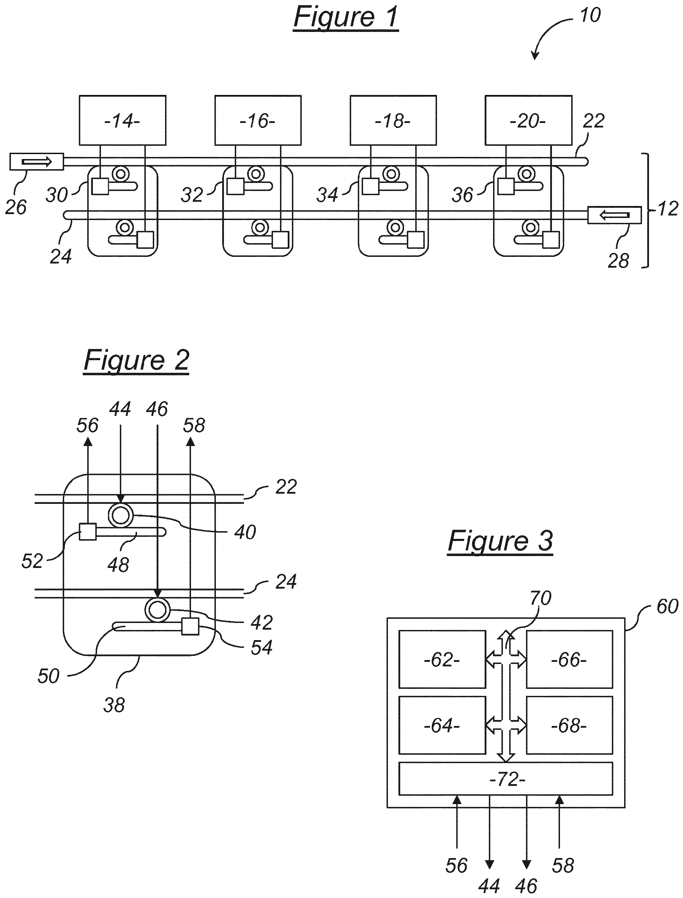

La figure 1 illustre la structure générale d'un système 10 de réseau sur puce comportant un dispositif d'arbitrage optique 12 selon un premier mode de réalisation de l'invention.

D'une façon générale, ce dispositif d'arbitrage optique 12 est capable de sélectionner un noeud de traitement parmi une pluralité de N noeuds de traitement du système 10 de réseau sur puce, chacun de ces noeuds de traitement souhaitant potentiellement accéder à une ressource partagée.

Plus précisément, la figure 1 comporte :

- quatre noeuds de traitement 14, 16, 18 et 20 ordonnés de gauche à droite dans le plan de la figure et souhaitant accéder à la ressource partagée, et
- le dispositif d'arbitrage optique 12.

Pour des raisons de clarté, la ressource partagée ainsi que les connexions entre les noeuds de traitement et cette ressource partagée ne sont pas représentées sur la figure 1.

Le dispositif d'arbitrage optique 12 comporte des premier et deuxième bus optiques principaux d'arbitrage 22 et 24, des première et deuxième sources optiques 26 et 28, chacune destinée à émettre un signal optique se propageant respectivement à travers l'un des deux bus optiques principaux d'arbitrage 22 et 24 et une succession de quatre cellules optiques d'arbitrage 30, 32, 34 et 36 disposées de gauche à droite dans le plan de la figure le long des premier et deuxième bus optiques principaux d'arbitrage 22 et 24.

Chacune des cellules optiques d'arbitrage 30, 32, 34 et 36 est couplée aux deux bus optiques principaux d'arbitrage 22 et 24. En outre, chacune des cellules optiques d'arbitrage 30, 32, 34 et 36 est associée respectivement à l'un des quatre noeuds de traitement 14, 16, 18 et 20 et a pour but de contrôler l'accès à la ressource partagée du noeud de traitement qui lui est associé.

Chacun des bus optiques principaux d'arbitrage 22 et 24 est alimenté en signal optique à l'une de ses extrémités par l'une des sources optiques 26 et 28 respectivement. Dans ce mode de réalisation, les signaux optiques émis par les sources optiques 26 et 28 peuvent être indifféremment de même longueur d'onde ou de longueurs d'ondes différentes. Chacun de ces signaux optiques se propage dans l'un des deux bus optiques principaux d'arbitrage 22 et 24 dans un sens opposé à l'autre par rapport à la succession des cellules optiques d'arbitrage 30, 32, 34 et 36 le long des deux bus optiques principaux d'arbitrage 22 et 24. Ainsi, la première source optique 26, disposée à l'extrémité gauche, dans le plan de la figure 1, du premier bus optique principal d'arbitrage 22, émet un premier signal optique se propageant de gauche à droite à travers ce premier bus optique principal d'arbitrage 22. La deuxième source optique 28, disposée à l'extrémité droite, dans le plan de la figure 1, du deuxième bus optique principal d'arbitrage 24, émet un deuxième signal optique se propageant de droite à gauche à travers ce deuxième bus optique principal d'arbitrage 24.

Chacune des cellules optiques d'arbitrage 30, 32, 34 et 36 présente des moyens de sélection du noeud de traitement 14, 16, 18 ou 20 auquel elle est associée par détournement des premier et deuxième signaux optiques précités.

La figure 2 illustre en détail les moyens de sélection de l'une quelconque des cellules optiques d'arbitrage 30, 32, 34 et 36 du dispositif d'arbitrage optique 12 de la figure 1 précédemment décrite, ces moyens de sélection comportant des moyens de détournement des premier et deuxième signaux optiques se propageant respectivement dans les premier et deuxième bus optiques principaux d'arbitrage 22 et 24 auxquels la cellule optique d'arbitrage 30, 32, 34 ou 36 est couplée. Sur cette figure, la référence générale 38 identifie l'une quelconque des cellules optiques d'arbitrage 30, 32, 34 ou 36 précédemment évoquées.

Les moyens de détournement des moyens de sélection de la cellule optique d'arbitrage 38 comportent deux filtres optiques 40 et 42 couplés respectivement aux premier et deuxième bus optiques principaux d'arbitrage 22 et 24 pour le détournement des premier et deuxième signaux optiques se propageant dans ces deux bus optiques principaux d'arbitrage 22 et 24.

Le noeud de traitement 14, 16, 18 ou 20 associé à la cellule optique d'arbitrage 38, lorsqu'il souhaite accéder à la ressource partagée, transmet ainsi deux signaux de requête 44 et 46 à la cellule optique d'arbitrage 38, plus précisément adressés respectivement aux deux filtres optiques 40 et 42. Sur réception de ces deux signaux de requête, les deux filtres optiques 40 et 42 sont activés et tentent de détourner respectivement les premier et deuxième signaux optiques se propageant dans les deux bus optiques principaux d'arbitrage 22 et 24. Chaque filtre optique 40 ou 42 peut être notamment réalisé à l'aide d'un micro-résonateur en anneau. On notera qu'en variante, pour certaines applications, les deux signaux de requête 44 et 46 peuvent faire référence à un même et unique signal de requête adressé à la cellule optique d'arbitrage 38.

Les moyens de sélection de la cellule optique d'arbitrage 38 comportent en outre deux bus optiques secondaires d'arbitrage 48 et 50 couplés respectivement aux deux filtres optiques 40 et 42 et destinés à la propagation de l'un parmi les premier et deuxième signaux optiques détournés. Deux convertisseurs optoélectroniques 52 et 54, par exemple des photodiodes, sont raccordés respectivement à l'une des extrémités des deux bus optiques secondaires d'arbitrage 48 et 50 pour la conversion des premier et deuxième signaux optiques détournés en des premier 56 et deuxième 58 signaux électriques d'acquittement retournés le cas échéant au nœud de traitement 14, 16, 18 ou 20 associé à la cellule optique d'arbitrage 38.

La sélection d'un nœud de traitement parmi plusieurs nœuds de traitement souhaitant accéder à la ressource partagée s'articule selon un schéma de priorités prédéfinies. Il va maintenant être démontré que, grâce à un dispositif d'arbitrage selon l'invention, tel que par exemple celui décrit précédemment, tous les nœuds de traitement 14, 16, 18 et 20 ont la même probabilité moyenne d'accès à la ressource partagée et par conséquent qu'un dispositif d'arbitrage optique selon l'invention est équitable du point de vue de la gestion des priorités.

Dans le mode de réalisation illustré sur la figure 1, à chaque cellule optique d'arbitrage 30, 32, 34 ou 36 sont assignées deux priorités relatives à sa position par rapport aux sens de propagation des premier et deuxième signaux optiques dans les deux bus optiques principaux d'arbitrage 22 et 24. Ainsi, la cellule optique d'arbitrage 30 recevant en premier le premier signal optique émis par la source optique 26 dans le premier bus optique principal d'arbitrage 22 dispose de la priorité la plus élevée, par exemple «4», cette priorité diminuant progressivement de «3» à «1» pour les cellules optiques d'arbitrage 32, 34 et 36 disposées successivement en aval dans le sens de propagation du premier signal optique. Cette même cellule optique d'arbitrage 30 reçoit en dernier le deuxième signal optique émis par la source optique 28 dans le deuxième bus optique principal d'arbitrage 24 et dispose dans ce cas de la priorité la plus faible, par exemple «1», cette priorité augmentant progressivement de «2» à «4» pour les cellules optiques d'arbitrage 32, 34 et 36 disposées successivement en amont dans le sens de propagation du deuxième signal optique. Ainsi, en faisant la moyenne de ces priorités deux à deux puisque le critère de sélection d'un nœud de traitement est basé sur le détournement des deux signaux optiques se propageant en sens inverses dans les deux bus optiques principaux d'arbitrage 22 et 24, il en résulte que la priorité moyenne prédéfinie de chaque cellule optique d'arbitrage est la même que pour les autres et, dans ce cas, égale à 5/2.

En généralisant à N cellules optiques d'arbitrage, la priorité moyenne prédéfinie est la même pour toutes les cellules optiques d'arbitrage et égale à (N+1)/2.

A titre d'exemple, la figure 3 représente schématiquement une implémentation possible de l'un des nœuds de traitement de la figure 1. Ainsi, la référence générale 60 identifie l'un quelconque des nœuds de traitement 14, 16, 18 et 20 précédemment évoqués. Ce nœud de traitement 60 peut comporter plusieurs modules 62, 64, 66 et 68 de traitement de données, notamment des cœurs de processeurs, des puces dédiées, des mémoires, etc. Les modules 62, 64, 66 et 68 de traitement de données sont reliés par un bus informatique 70 permettant des échanges de données entre eux. Le nœud de traitement peut en outre comporter un module de contrôle 72 également relié au bus informatique 70 pour des échanges de données entre chaque module 62, 64, 66 et 68 de traitement de données et le module de contrôle 72. Ce module de contrôle 72 permet la communication de chacun des modules de traitement 62, 64, 66 et 68 avec le dispositif d'arbitrage optique 12.

Dans cet exemple d'implémentation, le module de contrôle 72 fait partie du nœud de traitement 60, mais dans d'autres variantes de réalisation il peut être placé à l'extérieur du nœud de traitement 60. Egalement, dans cet exemple d'implémentation quatre modules 62, 64, 66 et 68 de traitement de données sont intégrés dans le nœud de traitement 60, mais dans d'autres variantes de réalisation ce nombre de modules de traitement peut être supérieur ou inférieur.

La communication entre le nœud de traitement 60 et le dispositif d'arbitrage optique 12 s'effectue à l'aide de quatre connexions électriques placées entre le module de contrôle 72 et la cellule d'arbitrage optique 38 associée au nœud de traitement 60. Ainsi, lorsque le nœud de traitement 60 souhaite accéder à la ressource partagée, il transmet, à l'aide du module de contrôle 72 et à travers deux des quatre connexions électriques précitées, les deux signaux de requête 44 et 46 à la cellule optique d'arbitrage 38 qui lui est associée. Dès lors que la cellule optique d'arbitrage 38 réussit à obtenir l'accès à la ressource partagée par détournement des premier et deuxième signaux optiques transitant dans les deux bus optiques principaux d'arbitrage 22 et 24, elle transmet au nœud de traitement 60 les deux signaux électriques d'acquittement 56 et 58.

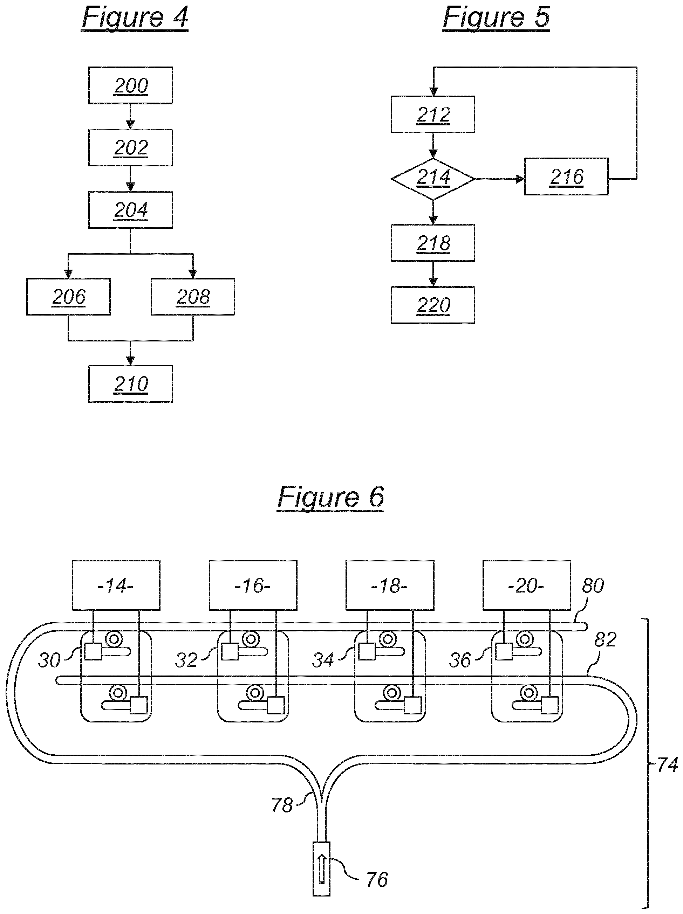

La figure 4 illustre les étapes successives d'un procédé d'arbitrage optique pouvant être mis en oeuvre à l'aide d'un dispositif d'arbitrage optique selon l'invention, notamment à l'aide du dispositif d'arbitrage optique 12 illustré sur la figure 1. Ce procédé d'arbitrage optique permet de sélectionner l'un parmi plusieurs nœuds de traitement souhaitant accéder de façon éventuellement conflictuelle à la ressource partagée.

Lors d'une première étape 200 de mise en service du dispositif d'arbitrage optique 12, la première source optique 26 génère et émet continûment le premier signal optique dans le premier bus optique principal d'arbitrage 22. Ce premier signal optique se propage dans un premier sens, de la gauche vers la droite dans la figure 1, de manière à passer tout d'abord au niveau de la cellule optique d'arbitrage 30, puis au niveau de la cellule optique d'arbitrage 32, puis au niveau de la cellule optique d'arbitrage 34, puis au niveau de la cellule optique d'arbitrage 36.

Au cours de cette même étape 200, la deuxième source optique 28 génère et émet continûment le deuxième signal optique dans le deuxième bus optique principal d'arbitrage 24. Ce deuxième signal optique se propage dans un deuxième sens opposé au premier, de la droite vers la gauche dans la figure 1, de manière à passer tout d'abord au niveau de la cellule optique d'arbitrage 36, puis au niveau de la cellule optique d'arbitrage 34, puis au niveau de la cellule optique d'arbitrage 32, puis au niveau de la cellule optique d'arbitrage 30.

Lors d'une étape 202 suivante, chaque noeud de traitement 14, 16, 18 ou 20 souhaitant accéder à la ressource partagée transmet simultanément les deux signaux de requête 44 et 46 à la cellule optique d'arbitrage 30, 32, 34 ou 36 qui lui est associée.

Au cours d'une étape 204, chaque cellule optique d'arbitrage 30, 32, 34 ou 36 ayant reçu les signaux de requête 44 et 46 tente de détourner les premier et deuxième signaux optiques se propageant en sens opposés respectivement le long des deux bus optiques principaux d'arbitrage 22 et 24.

Lors d'une étape 206 suivante, le convertisseur optoélectronique de la cellule optique d'arbitrage ayant réussi à détourner le premier signal optique, convertit ce premier signal optique en un premier signal électrique d'acquittement 56, et transmet ce premier signal électrique d'acquittement 56 au noeud de traitement associé à cette cellule optique d'arbitrage.

Lors d'une étape 208, exécutée avant, pendant ou après l'étape 206, mais après l'étape 204, le convertisseur optoélectronique de la cellule optique d'arbitrage ayant réussi à détourner le deuxième signal optique, convertit ce deuxième signal optique en un deuxième signal électrique d'acquittement 58, et transmet ce deuxième signal électrique d'acquittement 58 au noeud de traitement associé à cette cellule optique d'arbitrage.

Lors d'une dernière étape 210, l'un des noeuds de traitement souhaitant accéder à la ressource partagée est sélectionné s'il reçoit les deux signaux électriques d'acquittement 56 et 58 en réponse à sa requête.

Ainsi, une cellule optique d'arbitrage doit détourner à son profit les deux signaux optiques circulant en sens opposés dans les deux bus optiques principaux d'arbitrage pour donner l'accès à la ressource partagée au noeud de traitement auquel elle est associée.

Néanmoins, lorsqu'une cellule optique d'arbitrage détourne à son profit uniquement l'un des deux signaux optiques, elle n'obtient pas le droit d'accès à la ressource partagée mais empêche le reste des cellules optiques d'arbitrage d'accéder à ce signal optique et par conséquent d'accéder à la ressource partagée tant que le signal optique qu'elle a détourné n'est pas de nouveau libéré dans le bus optique principal d'arbitrage correspondant.

La figure 5 illustre donc les étapes successives d'un procédé de contrôle mis en oeuvre lors de l'exécution du procédé d'arbitrage optique détaillé précédemment, pour éviter toute situation de blocage. Ce procédé est exécuté par le module de contrôle 72 de chaque noeud de traitement, représenté sur la figure 3 par la référence générale 60, lorsque celui-ci souhaite accéder à la ressource partagée.

Lors d'une première étape 212, le module de contrôle 72 transmet les deux signaux de requête 44 et 46 à la cellule optique d'arbitrage 38 associée au noeud de traitement 60.

Lors d'une étape 214 suivante, le module de contrôle 72 vérifie la réception attendue des signaux électriques d'acquittement 56 et 58 provenant de la cellule optique d'arbitrage 38 en réponse à sa requête. Si le module de contrôle 72 reçoit au plus un signal électrique d'acquittement en réponse à sa requête, il en conclut que sa requête n'est pas acquittée.

Dans ce cas, lors d'une étape 216 suivante, le module de contrôle 72 cesse la transmission des deux signaux de requête 44 et 46 à la cellule optique d'arbitrage 38 associée pendant un temps d'attente T. Il convient que ce temps d'attente T soit différent pour chaque module de contrôle, car ceci permet d'éviter le renouvellement des conflits entre cellules optiques d'arbitrage pour le détournement des premier et deuxième signaux optiques. En effet, les tentatives de détournement par chacune des cellules optiques d'arbitrage auront lieu en des instants différents si les cellules optiques d'arbitrage reçoivent les signaux de requête en des instants différents. Diverses méthodes de calcul de ce temps d'attente T existent et seront présentées ultérieurement.

Après ce temps d'attente T, le procédé revient à l'étape 212 lors de laquelle le module de contrôle 72 transmet à nouveau les deux signaux de requête 44 et 46.

Les étapes successives 212, 214 et 216 précédemment détaillées se répètent jusqu'à ce que le noeud de traitement 60 soit sélectionné pour l'accès à la ressource partagée.

Si, lors de l'étape 214, le module de contrôle 72 reçoit les deux signaux électriques d'acquittement 56 et 58, il en conclut que le noeud de traitement 60 correspondant a été sélectionné.

Dans ce cas, l'étape 214 est suivie d'une étape 218, au cours de laquelle le module de contrôle 72 maintient la transmission des deux signaux de requête 44 et 46 à la cellule optique d'arbitrage 38 associée pendant tout le temps d'accès du noeud de traitement 60 sélectionné à la ressource partagée. Ceci force la cellule d'arbitrage 38 à maintenir détournés les premier et deuxième signaux optiques et réserve ainsi l'utilisation exclusive de la ressource partagée au noeud de traitement 60 sélectionné. Cette étape 218 de maintien de la transmission du signal de requête est avantageuse, car elle permet d'éviter toute interruption de transmission de données pouvant être provoquée par d'autres cellules optiques d'arbitrage souhaitant réserver l'accès à la ressource partagée.

Lors d'une dernière étape 220, dès lors que le noeud de traitement 60 sélectionné libère la ressource partagée, le module de contrôle 72 cesse la transmission des deux signaux de requête 44 et 46 à la cellule optique d'arbitrage 38 permettant ainsi l'accès à la ressource partagée aux autres noeuds de traitement.

Comme évoqué précédemment, il existe plusieurs méthodes de détermination du temps d'attente T. Celui-ci peut être défini de façon statique ou dynamique.

Un temps d'attente statique est un temps d'attente assigné à chaque module de contrôle 72 lors de sa conception et stocké dans un registre spécifique du module de contrôle. D'une façon générale, la priorité d'un noeud de traitement diminue statistiquement lorsque la valeur du temps d'attente statique de son module de contrôle augmente. Ainsi, la détermination d'un temps d'attente statique différent pour chaque noeud de traitement engendre une inégalité statistique dans les priorités effectives d'accès bien que la gestion des priorités prédéfinies selon l'invention soit a *priori* équitable.

En variante, chaque noeud de traitement 60 peut calculer de façon dynamique, c'est-à-dire pendant qu'il exécute ses traitements, le temps d'attente T de son module de contrôle 72. La valeur du temps d'attente T calculée dynamiquement est mise à jour dans le registre spécifique du module de contrôle 72 à l'aide d'un bus JTAG. L'avantage de cette variante c'est que le calcul dynamique des temps d'attente T peut être conçu de façon statistiquement équitable pour l'ensemble des noeuds de traitement.

Le module de contrôle 72 lui-même peut calculer le temps d'attente T à l'aide d'une fonction de calcul. Cette fonction de calcul est déterminée lors de la conception du système de réseau sur puce, car elle doit être conçue de façon à minimiser les latences du système de réseau sur puce et à garantir l'équité entre les noeuds de traitement lors du partage des ressources. Cette fonction peut être simplement une fonction aléatoire. Elle peut aussi répondre à un schéma d'arbitrage bien connu de l'homme du métier sous le nom de Round Robin qui permet d'attribuer des temps d'attente différents aux différents noeuds de traitement cycliquement et sans leur accorder de priorités particulières. D'autres fonctions plus complexes tenant compte de nombreux paramètres comme le nombre d'échecs consécutifs pour l'accès à la ressource partagée, la température du noeud de traitement, la taille des données à transmettre, etc., peuvent aussi être utilisées pour le calcul du temps d'attente T.

La figure 6 illustre la structure générale d'un système de réseau sur puce comportant un dispositif d'arbitrage optique 74 selon un deuxième mode de réalisation de l'invention.

Ce dispositif d'arbitrage optique 74 se distingue du précédent en ce qu'il comporte une source optique unique 76 connectée en sa sortie à un diviseur de signaux optiques 78, conçu pour scinder le signal optique engendré par la source optique unique 76 en deux signaux optiques de même longueur d'onde se propageant respectivement dans deux branches de sortie du diviseur.

Un premier bus optique principal d'arbitrage 80 est raccordé à l'une des deux branches de sortie du diviseur 78 et est couplé aux quatre cellules d'arbitrage 30, 32, 34 et 36. L'un des deux signaux optiques issus du diviseur est destiné à se propager en tant que premier signal optique dans ce premier bus optique principal d'arbitrage 80 dans un premier sens par rapport à ladite succession des quatre cellules optiques d'arbitrage 30, 32, 34 et 36.

Un deuxième bus optique principal d'arbitrage 82, raccordé à l'autre des deux branches de sortie du diviseur 78 est également couplé aux quatre cellules optiques d'arbitrage 30, 32, 34 et 36. L'autre des deux signaux optiques issus du diviseur est destiné à se propager dans ce deuxième bus optique principal d'arbitrage 82 en tant que deuxième signal optique dans un deuxième sens, opposé au premier sens, par rapport à ladite succession des quatre cellules optiques d'arbitrage 30, 32, 34 et 36.

Les cellules d'arbitrage de ce deuxième mode de réalisation de l'invention sont identiques à celles du premier mode de réalisation décrit précédemment en référence aux figures 1 et 2. Les noeuds de traitement 14, 16, 18 et 20 sont également inchangés.

Le principe de fonctionnement de ce deuxième mode de réalisation est également identique à celui décrit précédemment en référence aux figures 3 à 5.

Ce deuxième mode de réalisation présente l'avantage d'être moins coûteux que le précédent car une seule source optique 76 est nécessaire.

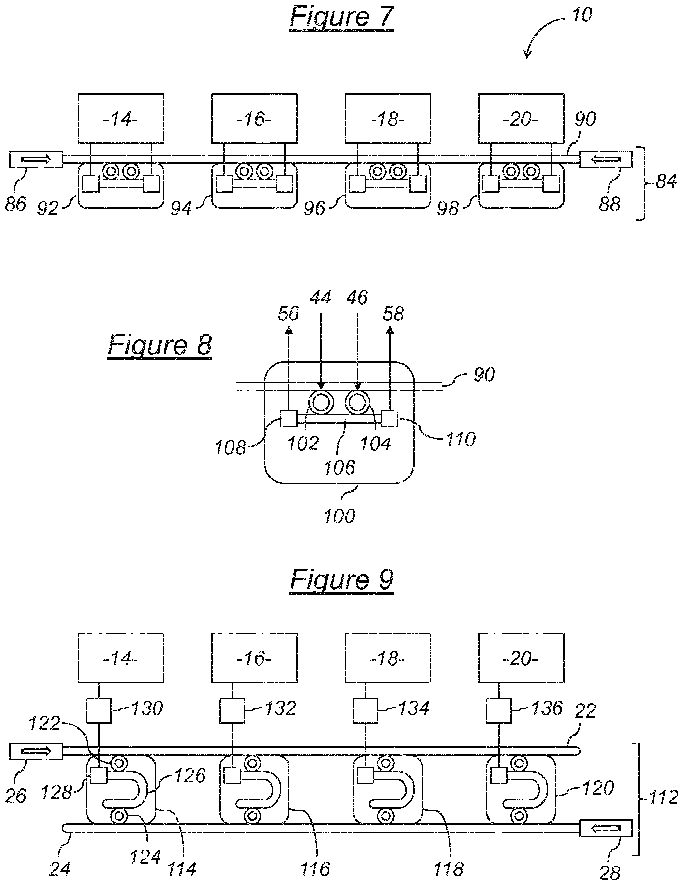

La structure générale d'un système de réseau sur puce comportant un dispositif d'arbitrage optique 84 selon un troisième mode de réalisation de l'invention est représentée schématiquement sur la figure 7. Les noeuds de traitement 14, 16, 18 et 20 sont inchangés.

En revanche, le dispositif d'arbitrage optique 84 se distingue des deux précédents en ce qu'il comporte deux sources optiques 86 et 88 engendrant respectivement les premier et deuxième signaux optiques et les émettant dans un unique bus optique principal d'arbitrage 90 en sens inverses. Dans ce cas, les deux signaux optiques sont nécessairement de longueurs d'ondes différentes.

L'unique bus optique principal d'arbitrage 90 est raccordé aux deux sources optiques 86 et 88 respectivement en ses deux extrémités et est couplé à quatre cellules d'arbitrage 92, 94, 96 et 98 différentes des cellules optiques d'arbitrage 30, 32, 34 et 36 illustrées sur les figures 1, 2 et 6. Le premier signal optique se propage dans ce bus optique principal d'arbitrage 90 dans un premier sens par rapport à ladite succession des quatre cellules optiques d'arbitrage 92, 94, 96 et 98 et le deuxième signal optique dans un deuxième sens, opposé au premier.

La figure 8 illustre en détail une implémentation possible de l'une quelconque des cellules optiques d'arbitrage 92, 94, 96 et 98 du dispositif d'arbitrage optique 84 de la figure 7. Sur cette figure, la référence générale 100 identifie l'une quelconque des cellules d'arbitrage 92, 94, 96 et 98.

Les moyens de détournement des moyens de sélection de la cellule optique d'arbitrage 100 illustrés sur la figure 8 comportent deux filtres optiques 102 et 104, couplés à l'unique bus optique principal d'arbitrage 90 et aptes à recevoir les deux signaux de requête 44 et 46 définis précédemment. Dès lors que les filtres optiques 102 et 104 reçoivent ces deux signaux de requête 44 et 46, ils sont activés et tentent de détourner respectivement les premier et deuxième signaux optiques, de longueurs d'ondes différentes, se propageant en sens inverses dans l'unique bus optique principal d'arbitrage 90. Ils sont pour cela respectivement réglés sur les longueurs d'ondes différentes des deux signaux optiques. En d'autres termes, ils ne sont pas accordés entre eux, n'entrant pas en résonance pour les mêmes fréquences.

Les moyens de sélection de la cellule optique d'arbitrage 100 comportent en outre un unique bus optique secondaire d'arbitrage 106 couplé aux deux filtres optiques 102 et 104 et destiné à la propagation des premier et deuxième signaux optiques détournés. Deux convertisseurs optoélectroniques 108 et 110, par exemple des photodiodes, raccordés respectivement aux deux extrémités du bus optique secondaire d'arbitrage 106 permettent la conversion des premier et deuxième signaux optiques détournés en les premier et deuxième signaux électriques d'acquittement 56 et 58 définis précédemment.

Avantageusement, ce troisième mode de réalisation permet d'épargner un bus optique principal d'arbitrage, ainsi qu'un bus optique secondaire d'arbitrage par cellule optique d'arbitrage, présentant ainsi un dispositif d'arbitrage optique plus compact et moins coûteux que ceux des modes de réalisation précédents.

Le principe de fonctionnement de ce troisième mode de réalisation est également identique à celui décrit précédemment en référence aux figures 3 à 5.

La figure 9 illustre la structure générale d'un système de réseau sur puce comportant un dispositif d'arbitrage optique 112 selon un quatrième mode de réalisation de l'invention.

Ce dispositif d'arbitrage optique 112 comporte, comme le dispositif d'arbitrage 12 de la figure 1, les deux bus optiques principaux d'arbitrage 22, 24 et les deux sources optiques 26, 28 pour une propagation des premier et deuxième signaux optiques identique à celle du premier mode de réalisation. Il s'en distingue néanmoins par l'emploi de quatre cellules optiques d'arbitrage 114, 116, 118 et 120 différentes des cellules optiques d'arbitrage 30, 32, 34 et 36 illustrées sur les figures 1, 2 et 6. Les quatre cellules optiques d'arbitrage 114, 116, 118 et 120 sont également différentes des cellules optiques d'arbitrage 92, 94, 96 et 98 illustrées sur les figures 7 et 8.

La cellule optique d'arbitrage 114 comporte tout d'abord, en tant que moyens de détournement des premier et deuxième signaux optiques, deux filtres optiques 122 et 124 couplés respectivement aux deux bus optiques principaux d'arbitrage 22, 24 et aptes à recevoir les deux signaux de requête 44 et 46 définis précédemment. Dès lors que les filtres optiques 122 et 124 reçoivent ces deux signaux de requête 44 et 46, ils sont activés et tentent de détourner respectivement les premier et deuxième signaux optiques se propageant en sens inverses dans les deux bus optiques principaux d'arbitrage 22 et 24.

La cellule optique d'arbitrage 114 comporte en outre un unique bus optique secondaire d'arbitrage 126 couplé aux deux filtres optiques 122 et 124 et destiné à la propagation des premier et deuxième signaux optiques détournés. Cet unique bus optique secondaire d'arbitrage 126 est configuré en aller-retour, c'est-à-dire en forme de U, de manière à imposer un unique sens de propagation des deux signaux optiques détournés le long de ce bus optique secondaire d'arbitrage 126 vers l'une seulement de ses extrémités pourvue d'un unique convertisseur optoélectronique 128. Le filtre optique 124 couplé au deuxième bus principal d'arbitrage 24 est ainsi par exemple raccordé à une branche aller du bus optique secondaire d'arbitrage 126, tandis que le filtre optique 122 couplé au premier bus principal d'arbitrage 22 est raccordé à une branche retour du bus optique secondaire d'arbitrage 126.

L'unique convertisseur optoélectronique 128, par exemple une photodiode, permet la conversion des premier et deuxième signaux optiques détournés en un unique signal électrique d'acquittement fourni en entrée d'un détecteur 130 de ce signal électrique d'acquittement, ce détecteur 130 reliant la cellule optique d'arbitrage 114 au noeud de traitement 14.

On notera que pour éviter toute fuite intempestive, vers le premier bus optique principal d'arbitrage 22, du deuxième signal optique détourné dans le bus optique secondaire d'arbitrage 126, il est nécessaire dans ce quatrième mode de réalisation également que les deux signaux optiques soient de longueurs d'ondes différentes et que les filtres optiques correspondants 122 et 124 soient respectivement réglés sur ces longueurs d'ondes différentes. En effet, si tel n'était pas le cas, le deuxième signal optique détourné dans l'une quelconque des cellules d'arbitrage 114, 116, 118 et 120 pourrait être en partie détourné une deuxième fois par le filtre optique 122 vers le premier bus optique principal d'arbitrage 22. En outre, si les longueurs d'ondes étaient identiques, les deux signaux optiques détournés dans le bus optique secondaire d'arbitrage 126 pourraient interférer entre eux, une telle interférence constructive ou destructive étant alors susceptible de nuire à leur détection.

Les cellules optiques d'arbitrage 116, 118 et 120 sont identiques à la cellule optique d'arbitrage 114 et ne seront donc pas détaillées. Elles sont reliées respectivement aux noeuds de traitement 16, 18 et 20 par des détecteurs 132, 134 et 136 identiques au détecteur 130.

Les noeuds de traitement 14, 16, 18 et 20 sont inchangés par rapport aux modes de réalisation précédents si ce n'est qu'ils sont conçus pour ne recevoir qu'un unique signal électrique d'acquittement représentatif des deux signaux optiques détournés par leur cellule optique d'arbitrage.

Avantageusement, ce quatrième mode de réalisation permet d'épargner un bus optique secondaire d'arbitrage et un convertisseur optoélectronique par cellule optique d'arbitrage, présentant ainsi un dispositif d'arbitrage optique plus compact et moins coûteux que celui du premier mode de réalisation.

En revanche, ce quatrième mode de réalisation n'est pas compatible avec le deuxième mode de réalisation illustré sur la figure 6 puisque les deux signaux optiques doivent être de longueurs d'ondes différentes.

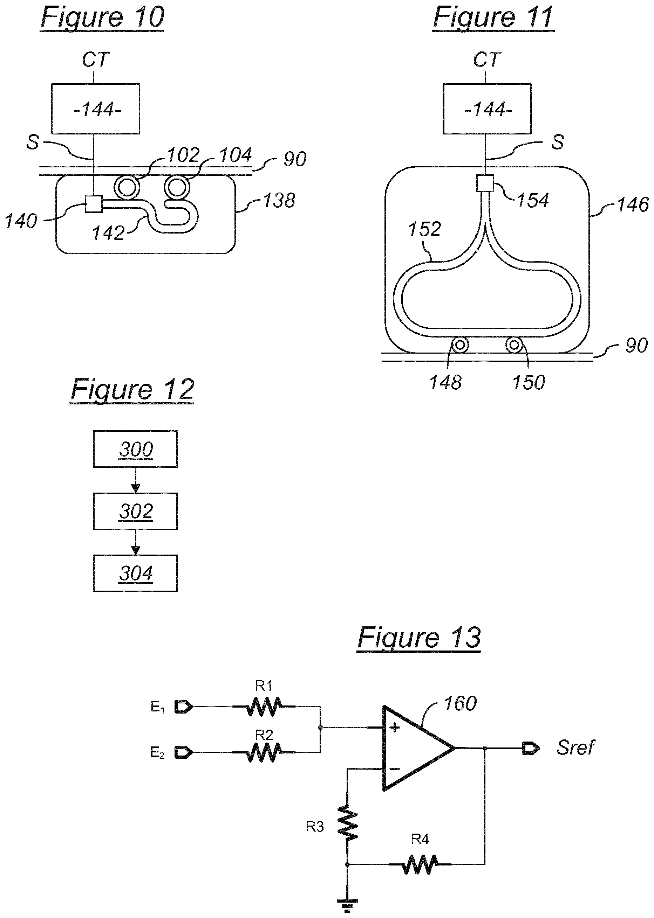

Il n'est pas possible non plus de modifier le troisième mode de réalisation illustré sur la figure 7 en remplaçant les cellules optiques d'arbitrage 92, 94, 96 et 98 par les cellules optiques d'arbitrage 114, 116, 118 et 120 parce que le troisième mode de réalisation ne présente qu'un seul bus optique principal d'arbitrage 90. Mais pour exploiter la même idée que celle du quatrième mode de réalisation, il est possible de modifier le troisième mode de réalisation illustré sur la figure 7 en remplaçant les cellules optiques d'arbitrage 92, 94, 96 et 98 non pas par les cellules optiques d'arbitrage 114, 116, 118 et 120 mais par des instances d'une nouvelle cellule optique d'arbitrage 138 en forme de crochet illustrée sur la figure 10.

Cette cellule optique d'arbitrage 138 comporte, comme la cellule optique d'arbitrage 100, les deux filtres optiques 102 et 104 couplés à l'unique bus optique principal d'arbitrage 90 et non accordés entre eux, ainsi que l'un des deux convertisseurs optoélectroniques 108 et 110, identifié par la référence 140 sur cette figure. L'autre des deux convertisseurs optoélectroniques ainsi que le bus optique secondaire d'arbitrage 106 sont remplacés par un unique bus optique secondaire d'arbitrage 142 en forme de crochet. La branche principale de ce bus optique secondaire d'arbitrage 142 est couplée au filtre optique 102 tandis que la branche de retour du crochet de ce bus optique secondaire d'arbitrage 142 est couplée au filtre optique 104. Ainsi, la forme en crochet de ce bus optique secondaire d'arbitrage 142 remplit la même fonction que la forme en U du bus optique secondaire d'arbitrage 126 de la figure 9, à savoir imposer un unique sens de propagation des deux signaux optiques détournés le long de ce bus optique secondaire d'arbitrage 142 par les deux filtres optiques 102, 104 vers l'une seulement de ses extrémités, celle de la branche principale, pourvue de l'unique convertisseur optoélectronique 140. La sortie du convertisseur optoélectronique 140 fournit alors un unique signal électrique d'acquittement S traité par un détecteur 144 identique aux détecteurs 130, 132, 134 et 136 pour la fourniture d'un signal binaire d'acquittement CT. Le signal binaire d'acquittement CT prend une première valeur, par exemple «1», si la cellule optique d'arbitrage 138 a réussi à détourner les deux signaux optiques, et une valeur «0» sinon.

Une autre variante des cellules optiques d'arbitrage 114, 116, 118 et 120, compatible avec le troisième mode de réalisation et équivalente à la solution illustrée sur la figure 10, est illustrée sur la figure 11.

Selon cette autre variante, l'une quelconque 146 des cellules optiques d'arbitrage couplées aux noeuds de traitement 14, 16, 18 et 20 comporte deux filtres optiques 148 et 150 non accordés entre eux, couplés à un unique bus optique principal d'arbitrage, par exemple le bus 90 de la figure 7, et aptes à recevoir les deux signaux de requête 44 et 46 définis précédemment. Dès lors que les filtres optiques 148 et 150 reçoivent ces deux signaux de requête 44 et 46, ils sont activés et tentent de détourner respectivement les premier et deuxième signaux optiques se propageant en sens inverses dans le bus optique principal d'arbitrage 90.

La cellule optique d'arbitrage 146 comporte en outre un unique bus optique secondaire d'arbitrage 152 couplé aux deux filtres optiques 148 et 150 et destiné à la propagation des premier et deuxième signaux optiques détournés. Cet unique bus optique secondaire d'arbitrage 152 est configuré en forme d'oignon, c'est-à-dire de telle sorte que ses deux extrémités se rejoignent en une seule. Ainsi, même si les deux signaux optiques détournés se propagent en sens inverses dans le bus optique secondaire d'arbitrage 152, ils se rejoignent finalement, en cette extrémité unique, en entrée d'un unique convertisseur optoélectronique 154. La sortie de ce convertisseur optoélectronique 154, par exemple une photodiode, fournit alors l'unique signal électrique d'acquittement S précité traité par le détecteur 144 défini précédemment.

On notera que la réception d'un unique signal électrique de requête S, au lieu des deux signaux 56 et 58 reçus dans les trois premiers modes de réalisation, ne change pas le principe du procédé de contrôle illustré sur la figure 5. Il convient juste de remplacer, à l'étape 214, la vérification de la réception attendue des signaux 56 et 58 par une vérification de la valeur, «0» ou «1», du signal binaire d'acquittement CT. CT = 0 conduit à l'étape 216 tandis que CT = 1 conduit à l'étape 218.

Le fonctionnement du détecteur 144, comme celui des détecteurs 130, 132, 134 et 136, va maintenant être détaillé. En effet, pour pouvoir fonctionner, ce détecteur 144 doit pouvoir comparer à tout instant la valeur du signal électrique d'acquittement S à une valeur seuil Sref prédéfinie permettant de décider si les deux signaux optiques ont été détournés ou pas. Il doit en outre pouvoir être calibré pour la détermination de cette valeur seuil Sref.

En ce qui concerne la comparaison du signal électrique d'acquittement S à la valeur seuil Sref prédéfinie, il suffit de la réaliser à l'aide d'un comparateur, par exemple un amplificateur opérationnel fonctionnant en régime saturé.

En ce qui concerne le calibrage, il convient de procéder de telle sorte que la valeur seuil trouvée soit pertinente, c'est-à-dire ni trop haute pour que le détecteur ne soit pas trop sélectif, ni trop basse pour que le détecteur ne soit pas trop passant.

En particulier, une valeur seuil théorique pertinente peut être donnée par l'équation suivante :

$$Sref = \max(E_1, E_2) + \max(E_{01}, E_{02}),$$

où $E_1$ est le signal reçu en sortie du convertisseur optoélectronique 140 ou 154 (ou 128 en ce qui concerne l'un des détecteurs 130, 132, 134 et 136) lorsque seul le premier filtre optique détournant le premier signal optique est activé (c'est-à-dire réglé sur la fréquence porteuse du premier signal optique), $E_2$ est le signal reçu en sortie du convertisseur optoélectronique 140 ou 154 (ou 128 en ce qui concerne l'un des détecteurs 130, 132, 134 et 136) lorsque seul le deuxième filtre optique détournant le deuxième signal optique est activé, $E_{01}$ est le signal électrique résiduel correspondant à la sortie du premier filtre optique lorsqu'il est désactivé (c'est-à-dire non réglé sur la fréquence porteuse du premier signal optique) et $E_{02}$ est le signal électrique résiduel correspondant à la sortie du deuxième filtre optique lorsqu'il est désactivé. Cette valeur seuil théorique pertinente suppose que les signaux optiques détournés n'interfèrent pas, c'est-à-dire que leurs puissances s'additionnent pour former le signal S, ce qui est le cas des modes de réalisation illustrés par les figures 7 à 11 puisque les deux signaux optiques n'y ont pas la même longueur d'onde.

En pratique, les valeurs de $E_{01}$ et $E_{02}$ ne sont pas simples à connaître. Par conséquent, en supposant que $\min(E_1, E_2) \gg \max(E_{01}, E_{02})$, il est possible de proposer un calcul de Sref qui ne dépend que de E1 et E2, par exemple selon l'équation suivante :

$$Sref = \max(E_1, E_2) + \frac{\min(E_1, E_2)}{2}.$$

Ainsi, un procédé de calibrage du détecteur 144 associé à la cellule optique d'arbitrage 138 ou 146 (ou de l'un des détecteurs 130, 132, 134, 136 associés aux cellules optiques d'arbitrage 114, 116, 118, 120) peut être simplement mis en oeuvre, comme illustré sur la figure 12. Il peut être exécuté à l'occasion d'une mise en route ou initialisation (répétée ou pas) du dispositif d'arbitrage optique correspondant, alors qu'il n'est pas encore opérationnel mais alors que les premier et deuxième signaux optiques circulent bien dans le (cas de la cellule optique d'arbitrage 138 ou 146) ou les (cas de la cellule optique d'arbitrage 114, 116, 118 ou 120) bus optiques principal/aux d'arbitrage. Il peut en particulier être mis en oeuvre pendant l'exécution de l'étape 200 décrite précédemment.

Lors d'une première étape 300 de ce procédé de calibrage, le premier filtre optique est activé alors que le deuxième filtre est désactivé, pour le détournement du premier signal optique et la valeur $E_1$ est mesurée par le signal électrique d'acquittement S.

Lors d'une deuxième étape 302 de ce procédé de calibrage, le deuxième filtre optique est activé alors que le premier filtre est désactivé, pour le détournement du deuxième signal optique et la valeur $E_2$ est mesurée par le signal électrique d'acquittement S.

Lors d'une dernière étape 304 de ce procédé de calibrage, la valeur de Sref est calculée à l'aide des deux valeurs $E_1$ et $E_2$ mesurées précédemment.

Le calcul précédemment proposé pour la détermination de Sref en fonction de $E_1$ et $E_2$ implique une implémentation électronique complexe à cause des fonctions min et max. Il peut alors être simplifié en supposant que $E_1$ et $E_2$ ont des valeurs très proches. Dans ce cas, il est en effet possible de proposer un calcul de Sref simplifié, par exemple selon l'équation suivante :

$$Sref = G.(E_1 + E_2),$$

où G est un gain constant de valeur comprise entre 0,5 et 1. Plus G est proche de 1, plus le détecteur 144 est sélectif.

Si $E_1$ et $E_2$ sont des tensions, l'implémentation électronique d'un tel calcul peut être simplement réalisée à l'aide d'un amplificateur opérationnel 160 utilisé dans un montage en additionneur non inverseur tel que celui illustré sur la figure 13.

Selon ce montage, deux entrées montées en parallèle sur l'entrée non inverseuse de l'amplificateur opérationnel 160 sont alimentées respectivement et séquentiellement par les valeurs de tension $E_1$ et $E_2$. Ces deux entrées présentent respectivement des résistances R1 et R2. L'entrée inverseuse de l'amplificateur opérationnel 160, de résistance R3, est raccordée à la masse. Enfin, la sortie de l'amplificateur opérationnel 160 fournit le signal électrique de requête Sref et est raccordée à la masse par une boucle de rétroaction de résistance R4.

Il en résulte de façon connue en soi la relation suivante :

$$Sref = \left(1 + \frac{R4}{R3}\right).\left(\frac{R2.E_1 + R1.E_2}{R1 + R2}\right).$$

En choisissant judicieusement R1 = R2 et R3 = 2.R4, cela donne G = 0,75, valeur pertinente de G lorsque $E_1$ et $E_2$ sont effectivement proches.

Il apparaît clairement qu'un dispositif d'arbitrage optique tel que l'un de ceux décrits précédemment permet de réaliser un arbitrage rapide, à faible bruit, faibles pertes et insensible aux ondes électromagnétiques.

En outre :

- il intègre aisément une fonction de blocage de jeton,
- il est conçu indépendamment des tailles de paquets de données à transmettre,

- il présente un temps d'aller-retour (de l'anglais «Round Trip Time») faible,
- il est robuste contre les pertes de jeton,
- il permet un accès équitable de tous les noeuds de traitement à une ressource partagée, y compris en cas de collisions dans les demandes d'accès,
- il utilise au minimum les ressources en guides d'ondes,
- il permet une grande souplesse d'implémentation, et
- il est facilement extensible.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

**Revendications**

1. Dispositif d'arbitrage optique (12; 74; 84; 112) entre des demandes conflictuelles d'accès à une ressource partagée émises par une pluralité de N noeuds de traitement (14, 16, 18, 20, 60) d'un système (10) de réseau sur puce, pour la sélection d'un noeud de traitement parmi la pluralité des N noeuds de traitement souhaitant accéder à la ressource partagée, comportant :

   - au moins un bus optique principal d'arbitrage (22, 24 ; 80, 82 ; 90),
   - au moins une source optique (26, 28 ; 76 ; 86, 88) destinée à émettre un premier signal optique dans ledit au moins un bus optique principal d'arbitrage, et
   - une succession de N cellules optiques d'arbitrage (30, 32, 34, 36, 38 ; 92, 94, 96, 98, 100 ; 114, 116, 118, 120 ; 138 ; 146) couplées audit au moins un bus optique principal d'arbitrage, chacune de ces cellules optiques d'arbitrage étant associée à un noeud de traitement parmi la pluralité des N noeuds de traitement et chacune présentant des moyens de sélection (40, 42, 48, 50, 52, 54 ; 102, 104, 106, 108, 110 ; 122, 124, 126, 128 ; 102, 104, 140, 142 ; 148, 150, 152, 154) du noeud de traitement auquel elle est associée par détournement du premier signal optique,

**caractérisé en ce que** :

   - ladite au moins une source optique (26, 28 ; 76 ; 86, 88) est conçue pour émettre un deuxième signal optique se propageant dans un sens opposé au premier signal optique par rapport à ladite succession des N cellules optiques d'arbitrage (30, 32, 34, 36, 38 ; 92, 94, 96, 98, 100 ; 114, 116, 118, 120 ; 138 ; 146) le long dudit au moins un bus optique principal d'arbitrage, et
   - les moyens de sélection (40, 42, 48, 50, 52, 54 ; 102, 104, 106, 108, 110 ; 122, 124, 126, 128 ; 102, 104, 140, 142 ; 148, 150, 152, 154) de chaque cellule optique d'arbitrage sont conçus pour sélectionner le noeud de traitement auquel elle est associée par détournement des premier et deuxième signaux optiques.

2. Dispositif d'arbitrage optique (12 ; 74 ; 84 ; 112) selon la revendication 1, dans lequel les moyens de sélection (40, 42, 48, 50, 52, 54 ; 102, 104, 106, 108, 110 ; 122, 124, 126, 128 ; 102, 104, 140, 142 ; 148, 150, 152, 154) de chaque cellule d'arbitrage comportent :

   - au moins un filtre optique (40, 42 ; 102, 104 ; 122, 124 ; 148, 150) pour le détournement des premier et deuxième signaux optiques,
   - au moins un bus optique secondaire d'arbitrage (48, 50 ; 106 ; 126 ; 142 ; 152) couplé audit au moins un filtre optique et destiné à la propagation des premier et deuxième signaux optiques détournés,
   - au moins un convertisseur optoélectronique (52, 54 ; 108, 110 ; 128 ; 140 ; 154) connecté à l'une des extrémités dudit au moins un bus optique secondaire d'arbitrage pour la conversion des premier et deuxième signaux optiques détournés en au moins un signal électrique d'acquittement.

3. Dispositif d'arbitrage optique (12; 112) selon la revendication 1 ou 2, comportant :

   - deux sources optiques (26, 28) conçues pour engendrer respectivement les premier et deuxième signaux optiques,
   - un premier bus optique principal d'arbitrage (22), raccordé à l'une (26) des deux sources optiques et couplé aux N cellules d'arbitrage (30, 32, 34, 36, 38 ; 114, 116, 118, 120), dans lequel est destiné à se propager le premier signal optique dans un premier sens par rapport à ladite succession des N cellules optiques d'arbitrage,
   - un deuxième bus optique principal d'arbitrage (24), raccordé à l'autre (28) des deux sources optiques et couplé aux N cellules d'arbitrage (30, 32, 34, 36, 38 ; 114, 116, 118, 120), dans lequel est destiné à se propager le deuxième signal optique dans un deuxième sens, opposé au premier sens, par rapport à ladite succession des N cellules optiques d'arbitrage.

**4.** Dispositif d'arbitrage optique (74) selon la revendication 1 ou 2, comportant :

- une source optique unique (76),
- un diviseur de signaux optiques (78) connecté en sortie de la source optique unique, conçu pour scinder un signal optique engendré par la source optique unique en deux signaux optiques de même longueur d'onde se propageant respectivement dans deux branches de sortie du diviseur,
- un premier bus optique principal d'arbitrage (80), raccordé à l'une des deux branches de sortie du diviseur (78) et couplé aux N cellules d'arbitrage (30, 32, 34, 36, 38), dans lequel est destiné à se propager l'un des deux signaux optiques issus du diviseur en tant que premier signal optique dans un premier sens par rapport à ladite succession des N cellules optiques d'arbitrage, et
- un deuxième bus optique principal d'arbitrage (82), raccordé à l'autre des deux branches de sortie du diviseur (78) et couplé aux N cellules d'arbitrage (30, 32, 34, 36, 38), dans lequel est destiné à se propager l'autre des deux signaux optiques issus du diviseur en tant que deuxième signal optique dans un deuxième sens, opposé au premier sens, par rapport à ladite succession des N cellules optiques d'arbitrage.

**5.** Dispositif d'arbitrage optique (12 ; 74) selon la revendication 3 ou 4, dans lequel les moyens de sélection (40, 42, 48, 50, 52, 54) comportent :

- deux filtres optiques (40, 42) pour le détournement respectif des premier et deuxième signaux optiques,
- deux bus optiques secondaires d'arbitrage (48, 50) chacun couplé à l'un des deux filtres optiques et chacun étant destiné à la propagation de l'un parmi les premier et deuxième signaux optiques détournés,
- deux convertisseurs optoélectroniques (52, 54) chacun raccordé à l'une des extrémités de l'un des deux bus optiques secondaires d'arbitrage pour la conversion des premier et deuxième signaux optiques détournés en des premier et deuxième signaux électriques d'acquittement (56, 58).

**6.** Dispositif d'arbitrage optique (84) selon la revendication 1 ou 2, comportant :

- deux sources optiques (86, 88) conçues pour engendrer respectivement les premier et deuxième signaux optiques, ceux-ci étant de longueurs d'ondes différentes,
- un unique bus optique principal d'arbitrage (90), raccordé aux deux sources optiques respectivement en ses deux extrémités et couplé aux N cellules d'arbitrage (92, 94, 96, 98, 100), dans lequel sont destinés à se propager le premier signal optique dans un premier sens par rapport à ladite succession des N cellules optiques d'arbitrage et le deuxième signal optique dans un deuxième sens, opposé au premier sens, par rapport à ladite succession des N cellules optiques d'arbitrage.

**7.** Dispositif d'arbitrage optique (84) selon la revendication 6, dans lequel les moyens de sélection (102, 104, 106, 108, 110) comportent :

- deux filtres optiques (102, 104) pour le détournement respectif des premier et deuxième signaux optiques,
- un unique bus optique secondaire d'arbitrage (106) couplé aux deux filtres optiques et destiné à la propagation des premier et deuxième signaux optiques détournés,
- deux convertisseurs optoélectroniques (108, 110) raccordés respectivement aux deux extrémités du bus optique secondaire d'arbitrage pour la conversion des premier et deuxième signaux optiques détournés en des premier et deuxième signaux électriques d'acquittement (56, 58).

**8.** Dispositif d'arbitrage optique (112) selon la revendication 3 ou 6, dans lequel les moyens de sélection (122, 124, 126, 128 ; 102, 104, 140, 142 ; 148, 150, 152, 154) comportent :

- deux filtres optiques (122, 124; 102, 104; 148, 150) pour le détournement des premier et deuxième signaux optiques,
- un unique bus optique secondaire d'arbitrage (126 ; 142 ; 152) couplé aux deux filtres optiques et destiné à la propagation des premier et deuxième signaux optiques détournés,
- un unique convertisseur optoélectronique (128 ; 140 ; 154) raccordé à au moins l'une des deux extrémités du bus optique secondaire d'arbitrage pour la conversion des premier et deuxième signaux optiques détournés en un unique signal électrique d'acquittement (S).

**9.** Procédé d'arbitrage optique entre des demandes conflictuelles d'accès à une ressource partagée émises par une pluralité de N noeuds de traitement (14, 16, 18, 20, 60) d'un système (10) de réseau sur puce,

pour la sélection d'un noeud de traitement parmi la pluralité des N noeuds de traitement souhaitant accéder à la ressource partagée, comportant les étapes suivantes :

    - émission (200) d'un premier signal optique par au moins une source optique (26, 28 ; 76 ; 86, 88) dans au moins un bus optique principal d'arbitrage (22, 24 ; 80, 82 ; 90) auquel sont couplées N cellules optiques d'arbitrage successives (30, 32, 34, 36, 38 ; 92, 94, 96, 98, 100; 114, 116, 118, 120; 138; 146), chacune de ces cellules optiques d'arbitrage étant associée à un noeud de traitement parmi la pluralité des N noeuds de traitement,
    - sélection (202, 204, 206, 208, 210) d'un noeud de traitement par détournement, par la cellule optique d'arbitrage associée à ce noeud de traitement, du premier signal optique,

    **caractérisé en ce que** :

    - ladite au moins une source optique émet (200) un deuxième signal optique se propageant dans un sens opposé au premier signal optique par rapport à ladite succession des N cellules optiques d'arbitrage le long dudit au moins un bus optique principal d'arbitrage, et
    - la sélection (202, 204, 206, 208, 210) du noeud de traitement s'effectue par détournement, par la cellule d'arbitrage associée à ce noeud de traitement, des premier et deuxième signaux optiques.

**10.** Procédé d'arbitrage optique selon la revendication 9, dans lequel la sélection (202, 204, 206, 208, 210) du noeud de traitement comporte les étapes suivantes :

    - transmission (202), par chaque noeud de traitement souhaitant accéder à la ressource partagée, d'au moins un signal de requête (44, 46) à la cellule optique d'arbitrage qui lui est associée,
    - tentative de détournement (204), par chaque cellule optique d'arbitrage ayant reçu ledit au moins un signal de requête, des premier et deuxième signaux optiques se propageant en sens opposés le long dudit au moins un bus optique principal d'arbitrage,
    - conversion (206), par un convertisseur optoélectronique de la cellule optique d'arbitrage ayant réussi à détourner le premier signal optique, du premier signal optique en un premier signal électrique d'acquittement (56 ; S), et transmission de ce premier signal électrique d'acquittement au noeud de traitement associé à cette cellule optique d'arbitrage,

    - conversion (208), par un convertisseur optoélectronique de la cellule optique d'arbitrage ayant réussi à détourner le deuxième signal optique, du deuxième signal optique en un deuxième signal électrique d'acquittement (58 ; S), et transmission de ce deuxième signal électrique d'acquittement au noeud de traitement associé à cette cellule optique d'arbitrage,

l'un des noeuds de traitement souhaitant accéder à la ressource partagée étant sélectionné (210) s'il reçoit les deux signaux électriques d'acquittement (56, 58 ; S) en réponse à sa requête.

**11.** Procédé d'arbitrage optique selon la revendication 10, dans lequel, si l'un des noeuds de traitement (14, 16, 18, 20, 60) souhaitant accéder à la ressource partagée est sélectionné, il maintient (218) la transmission dudit au moins un signal de requête (44, 46) à la cellule optique d'arbitrage qui lui est associée pendant un temps d'accès à la ressource partagée et cesse (220) cette transmission dès lors qu'il libère la ressource partagée.

**12.** Procédé d'arbitrage optique selon la revendication 10 ou 11, dans lequel, tout noeud de traitement (14, 16, 18, 20, 60) souhaitant accéder à la ressource partagée mais ne recevant qu'au plus un signal d'acquittement en réponse à sa requête, cesse (216) la transmission dudit au moins un signal de requête (44, 46) pendant un temps d'attente programmable.

**13.** Procédé d'arbitrage optique selon la revendication 12, dans lequel le temps d'attente est calculé par chaque noeud de traitement (14, 16, 18, 20, 60) selon un schéma d'arbitrage du type Round Robin.

**Patentansprüche**

**1.** Vorrichtung zur optischen Arbitrierung (12; 74; 84; 112) zwischen konkurrierenden Zugriffsanfragen auf eine gemeinsame Ressource, die von einer Vielzahl von N Verarbeitungsknoten (14, 16, 18, 20, 60) eines Network-on-Chip-Systems (10) ausgegeben werden, für die Auswahl eines Verarbeitungsknotens aus der Vielzahl der N Verarbeitungsknoten, die auf die gemeinsame Ressource zugreifen möchten, umfassend:

    - mindestens einen optischen Haupt-Arbitrierungsbus (22, 24; 80, 82; 90),
    - mindestens eine optische Quelle (26, 28; 76; 86, 88), die dazu vorgesehen ist, ein erstes optisches Signal in den mindestens einen optischen Haupt-Arbitrierungsbus auszugeben, und
    - eine Abfolge von N optischen Arbitrierungszellen (30, 32, 34, 36, 38; 92, 94, 96, 98, 100; 114, 116, 118, 120; 138; 146), die mit dem mindestens einen optischen Haupt-Arbitrierungsbus gekoppelt sind, wobei jede dieser optischen Arbitrierungszellen mit einem Verarbeitungsknoten aus der Vielzahl der N Verarbeitungsknoten assoziiert ist und jede Mittel zur Auswahl (40, 42, 48, 50, 52, 54; 102, 104, 106, 108, 110; 122, 124, 126, 128; 102, 104, 140, 142; 148, 150, 152, 154) des Verarbeitungsknotens, mit dem sie assoziiert ist, durch Ablenken des ersten optischen Signals aufweist,

**dadurch gekennzeichnet, dass**:

- die mindestens eine optische Quelle (26, 28; 76; 86, 88) dafür ausgebildet ist, ein zweites optisches Signal auszugeben, das sich in Bezug auf die Abfolge der N optischen Arbitrierungszellen (30, 32, 34, 36, 38; 92, 94, 96, 98, 100; 114, 116, 118, 120; 138; 146) in eine Richtung entgegengesetzt zum ersten optischen Signal entlang des mindestens einen optischen Haupt-Arbitrierungsbusses ausbreitet, und
- die Auswahlmittel (40, 42, 48, 50, 52, 54; 102, 104, 106, 108, 110; 122, 124, 126, 128; 102, 104, 140, 142; 148, 150, 152, 154) von jeder optischen Arbitrierungszelle dafür ausgebildet sind, den Verarbeitungsknoten, mit dem sie assoziiert ist, durch Ablenken des ersten und zweiten optischen Signals auszuwählen.

2. Optische Arbitrierungsvorrichtung (12; 74; 84; 112) nach Anspruch 1, wobei die Auswahlmittel (40, 42, 48, 50, 52, 54; 102, 104, 106, 108, 110; 122, 124, 126, 128; 102, 104, 140, 142; 148, 150, 152, 154) von jeder Arbitrierungszelle umfassen:

- mindestens einen optischen Filter (40, 42; 102, 104; 122, 124; 148, 150) für das Ablenken des ersten und zweiten optischen Signals;
- mindestens einen sekundären optischen Arbitrierungsbus (48, 50; 106; 126; 142; 152), der mit dem mindestens einen optischen Filter gekoppelt und für die Ausbreitung des abgelenkten ersten und zweiten optischen Signals vorgesehen ist,
- mindestens einen optoelektronischen Wandler (52, 54; 108, 110; 128; 140; 154), der mit einem der Enden des mindestens einen sekundären optischen Arbitrierungsbusses verbunden ist, für die Umwandlung des abgelenkten ersten und zweiten optischen Signals in mindestens ein elektrisches Quittierungssignal.

3. Optische Arbitrierungsvorrichtung (12; 112) nach Anspruch 1 oder 2, umfassend:

- zwei optische Quellen (26, 28), die dafür ausgebildet sind, jeweils das erste und zweite optische Signal zu erzeugen,
- einen ersten optischen Haupt-Arbitrierungsbus (22), der an eine (26) der zwei optischen Quellen angeschlossen und mit den N Arbitrierungszellen (30, 32, 34, 36, 38; 114, 116, 118, 120) gekoppelt ist, in welchem das erste optische Signal dazu vorgesehen ist, sich in Bezug auf die Abfolge der N optischen Arbitrierungszellen in eine erste Richtung auszubreiten,
- einen zweiten optischen Haupt-Arbitrierungsbus (24), der an die andere (28) der zwei optischen Quellen angeschlossen und mit den N Arbitrierungszellen (30, 32, 34, 36, 38; 114, 116, 118, 120) gekoppelt ist, in welchem das zweite optische Signal dazu vorgesehen ist, sich in Bezug auf die Abfolge der N optischen Arbitrierungszellen in eine zweite, der ersten Richtung entgegengesetzte Richtung auszubreiten.

4. Optische Arbitrierungsvorrichtung (74) nach Anspruch 1 oder 2, umfassend:

- eine einzige optische Quelle (76),
- einen optischen Signalteiler (78), der am Ausgang der einzigen optischen Quelle verbunden ist, der dazu ausgebildet ist, ein von der einzigen optischen Quelle erzeugtes optisches Signal in zwei optische Signale von gleicher Wellenlänge aufzuteilen, die sich jeweils in zwei Ausgangszweigen des Teilers ausbreiten,
- einen ersten optischen Haupt-Arbitrierungsbus (80), der an einen der zwei Ausgangszweige des Teilers (78) angeschlossen und mit den N Arbitrierungszellen (30, 32, 34, 36, 38) gekoppelt ist, in welchem eines der zwei aus dem Teiler stammenden optischen Signale dazu vorgesehen ist, sich als erstes optisches Signal in Bezug auf die Abfolge der N optischen Arbitrierungszellen in eine erste Richtung auszubreiten, und
- einen zweiten optischen Haupt-Arbitrierungsbus (82), der an den anderen der zwei Ausgangszweige des Teilers (78) angeschlossen und mit den N Arbitrierungszellen (30, 32, 34, 36, 38) gekoppelt ist, in welchem das andere der zwei aus dem Teiler stammenden optischen Signale dazu vorgesehen ist, sich als zweites optisches Signal in Bezug auf die Abfolge der N optischen Arbitrierungszellen in eine zweite, der ersten Richtung entgegengesetzte Richtung auszubreiten.

5. Optische Arbitrierungsvorrichtung (12; 74) nach Anspruch 3 oder 4, wobei die Auswahlmittel (40, 42, 48, 50, 52, 54) umfassen:

- zwei optische Filter (40, 42) für das jeweilige Ablenken des ersten und zweiten optischen Signals,

- zwei sekundäre optische Arbitrierungsbusse (48, 50), die jeder an einen der zwei optischen Filter gekoppelt und jeder für die Ausbreitung von einem aus dem abgelenkten ersten und zweiten optischen Signal vorgesehen sind,

- zwei optoelektronische Wandler (52, 54), die jeder an eines der Enden von einem der zwei sekundären optischen Arbitrierungsbusse angeschlossen sind, für die Umwandlung des abgelenkten ersten und zweiten optischen Signals in erste und zweite elektrische Quittierungssignale (56, 58).

6. Optische Arbitrierungsvorrichtung (84) nach Anspruch 1 oder 2, umfassend:

- zwei optische Quellen (86, 88), die dafür ausgebildet sind, jeweils das erste und zweite optische Signal zu erzeugen, wobei diese von unterschiedlichen Wellenlängen sind,

- einen einzigen optischen Haupt-Arbitrierungsbus (90), der an seinen zwei Enden jeweils an die zwei optischen Quellen angeschlossen und mit den N Arbitrierungszellen (92, 94, 96, 98, 100) gekoppelt ist, in welchem das erste optische Signal dazu vorgesehen ist, sich in Bezug auf die Abfolge der N optischen Arbitrierungszellen in eine erste Richtung, und das zweite optische Signal sich in Bezug auf die Abfolge der N optischen Arbitrierungszellen in eine zweite, der ersten Richtung entgegengesetzte Richtung auszubreiten.

7. Optische Arbitrierungsvorrichtung (84) nach Anspruch 6, wobei die Auswahlmittel (102, 104, 106, 108, 110) umfassen:

- zwei optische Filter (102, 104) für das jeweilige Ablenken des ersten und zweiten optischen Signals,

- einen einzigen sekundären optischen Arbitrierungsbus (106), der mit den zwei optischen Filtern gekoppelt und für die Ausbreitung des abgelenkten ersten und zweiten optischen Signals vorgesehen ist,

- zwei optoelektronische Wandler (108, 110), die jeweils an die zwei Enden des sekundären optischen Arbitrierungsbusses angeschlossen sind, für die Umwandlung des abgelenkten ersten und zweiten optischen Signals in erste und zweite elektrische Quittierungssignale (56, 58).

8. Optische Arbitrierungsvorrichtung (112) nach Anspruch 3 oder 6, wobei die Auswahlmittel (122, 124, 126, 128; 102, 104, 140, 142; 148, 150, 152, 154) umfassen:

- zwei optische Filter (122, 124; 102, 104; 148, 150) für das Ablenken des ersten und zweiten optischen Signals,

- einen einzigen sekundären optischen Arbitrierungsbus (126; 142; 152), der mit den zwei optischen Filtern gekoppelt und für die Ausbreitung des abgelenkten ersten und zweiten optischen Signals vorgesehen ist,

- einen einzigen optoelektronischen Wandler (128; 140; 154), der an mindestens eines der zwei Enden des sekundären optischen Arbitrierungsbusses angeschlossen ist, für die Umwandlung des abgelenkten ersten und zweiten optischen Signals in ein einziges elektrisches Quittierungssignal (S).

9. Verfahren zur optischen Arbitrierung zwischen konkurrierenden Zugriffsanfragen auf eine gemeinsame Ressource, die von einer Vielzahl von N Verarbeitungsknoten (14, 16, 18, 20, 60) eines Network-on-Chip-Systems (10) ausgegeben werden, für die Auswahl eines Verarbeitungsknotens aus der Vielzahl der N Verarbeitungsknoten, die auf die gemeinsame Ressource zugreifen möchten, umfassend die folgenden Schritte:

- Ausgeben (200) eines ersten optischen Signals durch mindestens eine optische Quelle (26, 28; 76; 86, 88) in mindestens einen optischen Haupt-Arbitrierungsbus (22, 24; 80, 82; 90), mit dem N aufeinanderfolgende optische Arbitrierungszellen (30, 32, 34, 36, 38; 92, 94, 96, 98, 100; 114, 116, 118, 120; 138; 146) gekoppelt sind, wobei jede dieser optischen Arbitrierungszellen mit einem Verarbeitungsknoten aus der Vielzahl der N Verarbeitungsknoten assoziiert ist,

- Auswählen (202, 204, 206, 208, 210) eines Verarbeitungsknotens durch Ablenken des ersten optischen Signals durch die optische Arbitrierungszelle, die mit diesem Verarbeitungsknoten assoziiert ist,

**dadurch gekennzeichnet, dass**:

- die mindestens eine optische Quelle ein zweites optisches Signal ausgibt (200), das sich in Bezug auf die Abfolge der N optischen Arbitrierungszellen in eine Richtung entgegengesetzt zum ersten optischen Signal entlang des mindestens einen optischen Haupt-Arbitrierungsbusses ausbreitet, und

- das Auswählen (202, 204, 206, 208, 210) des Verarbeitungsknotens durch Ablenken des ersten und zweiten optischen Signals durch Arbitrierungszelle, die mit diesem Verarbeitungsknoten assoziiert ist, erfolgt.

10. Optisches Arbitrierungsverfahren nach Anspruch 9, wobei das Auswählen (202, 204, 206, 208, 210) des Verarbeitungsknotens die folgenden Schritte umfasst:

    - Übertragen (202) von mindestens einem Anforderungssignal (44, 46) durch jeden Verarbeitungsknoten, der auf die gemeinsame Ressource zugreifen möchte, an die optische Arbitrierungszelle, die mit ihm assoziiert ist,
    - Versuch des Ablenkens (204) des ersten und zweiten optischen Signals, die sich in entgegengesetzte Richtungen entlang des mindestens einen optischen Haupt-Arbitrierungsbusses ausbreiten, durch jede optische Arbitrierungszelle, die das mindestens eine Anforderungssignal empfangen hat,
    - Umwandeln (206) des ersten optischen Signals in ein erstes elektrisches Quittierungssignal (56; S) durch einen optoelektronischen Wandler der optischen Arbitrierungszelle, der es gelungen ist, das erste optische Signal abzulenken, und Übertragen dieses ersten elektrischen Quittierungssignals an den Verarbeitungsknoten, der mit dieser optischen Arbitrierungszelle assoziiert ist,
    - Umwandeln (208) des zweiten optischen Signals in ein zweites elektrisches Quittierungssignal (58; S) durch einen optoelektronischen Wandler der optischen Arbitrierungszelle, der es gelungen ist, das zweite optische Signal abzulenken, und Übertragen dieses zweiten elektrischen Quittierungssignals an den Verarbeitungsknoten, der mit dieser optischen Arbitrierungszelle assoziiert ist,

wobei einer der Verarbeitungsknoten, die auf die gemeinsame Ressource zugreifen möchten, ausgewählt ist (210), wenn er in Antwort auf seine Anforderung die zwei elektrischen Quittierungssignale (56, 58; S) empfängt.

11. Optisches Arbitrierungsverfahren nach Anspruch 10, wobei, wenn einer der Verarbeitungsknoten (14, 16, 18, 20, 60), die auf die gemeinsame Ressource zugreifen möchten, ausgewählt ist, er die Übertragung des mindestens einen Anforderungssignals (44, 46) an die optische Arbitrierungszelle, die mit ihm assoziiert ist, während einer Zugriffsdauer auf die gemeinsame Ressource aufrecht erhält (218) und diese Übertragung einstellt (220), sobald er die gemeinsame Ressource freigibt.

12. Optisches Arbitrierungsverfahren nach Anspruch 10 oder 11, wobei jeder Verarbeitungsknoten (14, 16, 18, 20, 60), der auf die gemeinsame Ressource zugreifen möchte, aber in Antwort auf seine Anforderung höchsten ein Quittierungssignal empfängt, die Übertragung des mindestens einen Anforderungssignals (44, 46) während einer programmierbaren Wartedauer einstellt (216).

13. Optisches Arbitrierungsverfahren nach Anspruch 12, wobei die Wartedauer durch jeden Verarbeitungsknoten (14, 16, 18, 20, 60) nach einem Arbitrierungsschema vom Typ Round Robin berechnet wird.

## Claims

1. An optical arbiter device (12; 74; 84; 112) between conflicting access requests to a shared resource sent by a plurality of N processing nodes (14, 16, 18, 20, 60) of a network-on-chip system (10), for selecting a processing node from the plurality of N processing nodes seeking to access the shared resource, comprising:

    - at least one primary optical arbiter bus (22, 24; 80, 82; 90),
    - at least one optical source (26, 28; 76; 86, 88) for transmitting a first optical signal in said at least one primary optical arbiter bus, and
    - a sequence of N optical arbiter cells (30, 32, 34, 36, 38; 92, 94, 96, 98, 100; 114, 116, 118, 120; 138; 146) coupled with said at least one primary optical arbiter bus, each of these optical arbiter cells being associated with a processing node from the plurality of N processing nodes and each having means (40, 42, 48, 50, 52, 54; 102, 104, 106, 108, 110; 122, 124, 126, 128; 102, 104, 140, 142; 148, 150, 152, 154) for selecting the processing node with which said each optical arbiter cell is associated by re-routing the first optical signal,

**characterized in that**:

    - said at least one optical source (26, 28; 76; 86, 88) is designed to transmit a second optical signal propagated in an opposite direction to the first optical signal in relation to said sequence of N optical arbiter cells (30, 32, 34, 36, 38; 92, 94, 96, 98, 100; 114, 116, 118, 120; 138; 146) along said at least one primary optical arbiter bus, and
    - the selection means (40, 42, 48, 50, 52, 54; 102, 104, 106, 108, 110; 122, 124, 126, 128; 102, 104, 140, 142; 148, 150, 152, 154) of each optical arbiter cell are designed to select the processing node with which said each optical arbiter cell is associated by re-routing the first and second optical signals.

**2.** The optical arbiter device (12; 74; 84; 112) according to claim 1, wherein the selection means (40, 42, 48, 50, 52, 54; 102, 104, 106, 108, 110; 122, 124, 126, 128; 102, 104, 140, 142; 148, 150, 152, 154) of each optical arbiter cell comprise:

- at least one optical filter (40, 42; 102, 104; 122, 124; 148, 150) for re-routing the first and second optical signals,
- at least one secondary optical arbiter bus (48, 50; 106; 126; 142; 152) coupled with said at least one optical filter and intended for propagating the re-routed first and second optical signals,
- at least one optoelectronic converter (52, 54; 108, 110; 128; 140; 154) connected to one of the ends of said at least one secondary optical arbiter bus for converting the re-routed first and second optical signals into at least one electrical acknowledge signal.

**3.** The optical arbiter device (12; 112) according to claim 1 or 2, comprising:

- two optical sources (26, 28) designed to generate the first and second optical signals respectively,
- a first primary optical arbiter bus (22), connected to one (26) of the two optical sources and coupled with the N arbiter cells (30, 32, 34, 36, 38; 114, 116, 118, 120), wherein the first optical signal is intended to be propagated in a first direction in relation to said sequence of N optical arbiter cells,
- a second primary optical arbiter bus (24), connected to the other (28) of the two optical sources and coupled with the N arbiter cells (30, 32, 34, 36, 38; 114, 116, 118, 120), wherein the second optical signal is intended to be propagated in a second direction, opposite the first direction, in relation to said sequence of N optical arbiter cells.

**4.** The optical arbiter device (74) according to claim 1 or 2, comprising:

- a single optical source (76),
- an optical signal splitter (78) connected at the output of the single optical source, designed to split an optical signal generated by the single optical source into two optical signals of the same wavelength propagated in two splitter output arms, respectively,
- a first primary optical arbiter bus (80), connected to one of the two output arms of the splitter (78) and coupled with the N arbiter cells (30, 32, 34, 36, 38), wherein one of the two optical signals from the splitter is intended to be propagated as the first optical signal in a first direction in relation to said sequence of N optical arbiter cells, and
- a second primary optical arbiter bus (82), connected to the other of the two output arms of the splitter (78) and coupled with the N arbiter cells (30, 32, 34, 36, 38), wherein the other of the two optical signals from the splitter is intended to be propagated as the second optical signal in a second direction, opposite the first direction, in relation to said sequence of N optical arbiter cells.

**5.** The optical arbiter device (12; 74) according to claim 3 or 4, wherein the selection means (40, 42, 48, 50, 52, 54) comprise:

- two optical filters (40, 42) for the respective re-routing of the first and second optical signals,
- two secondary optical arbiter buses (48, 50) each coupled with one of the two optical filters and each being intended for propagating one of the re-routed first and second optical signals,
- two optoelectronic converters (52, 54) each connected to one of the ends of one of the two secondary optical arbiter buses for converting the re-routed first and second optical signals into first and second electrical acknowledge signals (56, 58).

**6.** The optical arbiter device (84) according to claim 1 or 2, comprising:

- two optical sources (86, 88) designed for generating the first and second optical signals, respectively, said signals having different wavelengths,
- a single primary optical arbiter bus (90), connected to the two optical sources respectively at both ends thereof and coupled with the N arbiter cells (92, 94, 96, 98, 100), wherein the first optical signal is intended to be propagated in a first direction in relation to said sequence of N optical arbiter cells and the second optical signal in a second direction, opposite the first direction, in relation to said sequence of N optical arbiter cells.

**7.** The optical arbiter device (84) according to claim 6, wherein the selection means (102, 104, 106, 108, 110) comprise:

- two optical filters (102, 104) for the respective re-routing of the first and second optical signals,
- a single secondary optical arbiter bus (106) coupled with the two optical filters and intended for propagating the re-routed first and second optical signals,
- two optoelectronic converters (108, 110) respectively connected to both ends of the secondary optical arbiter bus for converting the re-routed first and second optical signals into first and second electrical acknowledge signals (56, 58).

8. The optical arbiter device (112) according to claim 3 or 6, wherein the selection means (122, 124, 126, 128; 102, 104, 140, 142; 148, 150, 152, 154) comprise:

- two optical filters (122, 124; 102, 104; 148, 150) for the re-routing of the first and second optical signals,
- a single secondary optical arbiter bus (126; 142; 152) coupled with the two optical filters and intended for propagating the re-routed first and second optical signals,
- a single optoelectronic converter (128; 140; 154) connected to at least one of the two ends of the secondary optical arbiter bus for converting the re-routed first and second optical signals into a single electrical acknowledge signal (S).

9. An optical arbitration method between conflicting access requests to a shared resource sent by a plurality of N processing nodes (14, 16, 18, 20, 60) of a network-on-chip system (10), for selecting a processing node from the plurality of N processing nodes seeking to access the shared resource, comprising the following steps:

- sending (200) a first optical signal via at least one optical source (26, 28; 76; 86, 88) in at least one primary optical arbiter bus (22, 24; 80, 82; 90) with which N successive optical arbiter cells (30, 32, 34, 36, 38; 92, 94, 96, 98, 100; 114, 116, 118, 120; 138; 146) are coupled, each of these optical arbiter cells being associated with a processing node from the plurality of N processing nodes,
- selecting (202, 204, 206, 208, 210) a processing node by re-routing, via the optical arbiter cell associated with this processing node, the first optical signal,

**characterized in that**:

- said at least one optical source transmits (200) a second optical signal propagated in an opposite direction to the first optical signal in relation to said sequence of N optical arbiter cells along said at least one primary optical arbiter bus, and
- the processing node is selected (202, 204, 206, 208, 210) by re-routing, via the arbiter cell associated with this processing node, the first and second optical signals.

10. The optical arbitration method according to claim 9, wherein selecting (202, 204, 206, 208, 210) the processing node comprises the following steps:

- transmission (202), by each processing node seeking to access the shared resource, of at least one request signal (44, 46) to the optical arbiter cell associated therewith,
- attempt to re-route (204), by each optical arbiter cell having received said at least one request signal, the first and second optical signals propagated in opposite directions along said at least one primary optical arbiter bus,
- conversion (206), by an optoelectronic converter of the optical arbiter cell having succeeded in re-routing the first optical signal, of the first optical signal into a first electrical acknowledge signal (56; S), and transmission of this first electrical acknowledge signal to the processing node associated with this optical arbiter cell,
- conversion (208), by an optoelectronic converter of the optical arbiter cell having successfully re-routed the second optical signal, of the second optical signal into a second electrical acknowledge signal (58; S), and transmission of this second electrical acknowledge signal to the processing node associated with this optical arbiter cell,

one of the processing nodes seeking to access the shared resource being selected (210) if it receives both electrical acknowledge signals (56, 58; S) in response to the request thereof.

11. The optical arbitration method according to claim 10, wherein, if one of the processing nodes (14, 16, 18, 20, 60) seeking to access the shared resource is selected, it keeps (218) transmitting said at least one request signal (44, 46) to the optical arbiter cell associated therewith for a shared resource access time and stops (220) this transmission on freeing up the shared resource.

12. The optical arbitration method according to claim 10 or 11, wherein, any processing node (14, 16, 18, 20, 60) seeking to access the shared resource but only receiving not more than one acknowledge signal in respect to the request thereof, stops (216) the transmission of said at least one request signal (44, 46) for a programmable wait time.

13. The optical arbitration method according to claim 12, wherein the wait time is computed by each processing node (14, 16, 18, 20, 60) according to a Round Robin arbitration scheme.

## Figure 1

## Figure 2

## Figure 3

## Figure 4

## Figure 5

## Figure 6

## Figure 7

## Figure 8

## Figure 9

## Figure 10

CT

-144-

S

102 104 90

140

142 138

## Figure 11

CT

-144-

S

154

152 146

148 150 90

## Figure 12

300

302

304

## Figure 13

160

R1

$E_1$

R2

$E_2$

+

−

Sref

R3

R4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DALLY ; TOWLES.** Principles and practices of interconnection networks. Morgan Kaufmann, 2004, 252-255
- **VANTREASE et al.** Corona: system implications of emerging nanophotonic technology. *ISCA Proceedings of the 35th Annual International Symposium on Computer Architecture,* 2008, 153-164
- **VANTREASE et al.** Light speed arbitration and flow control for nanophotonic interconnects. *42nd Annual IEEE/ACM International Symposium on Microarchitecture,* 12 Décembre 2009, 304-315

- All-optical WDM multi-rings with differentiated QoS. **MARSAN et al.** IEEE Communications Magazine. IEEE Service Center, 01 Février 1999, vol. 37, 58-66
- **WILSON.** SSA: a high-performance serial interface for unparallel connectivity. *Digest of Papers of COMPCON (Computer Society Conférence), 1996 Technologies for the Information Superhighway,* 25 Février 1996, 274-279